(19) Europäisches Patentamt
European Patent Office
Office européen des brevets

(11) EP 1 795 265 A2

(12) DEMANDE DE BREVET EUROPEEN

(43) Date de publication:
**13.06.2007 Bulletin 2007/24**

(21) Numéro de dépôt: **06023550.4**

(22) Date de dépôt: **12.06.2001**

(51) Int Cl.:
*B02C 23/06* (2006.01) *B01J 13/00* (2006.01)
*C08F 220/28* (2006.01) *C08F 220/34* (2006.01)
*D21H 19/58* (2006.01) *D21H 19/60* (2006.01)
*C09C 1/02* (2006.01) *C09C 1/36* (2006.01)
*C09C 3/10* (2006.01) *C09C 1/42* (2006.01)
*C09C 3/04* (2006.01) *C09K 8/24* (2006.01)
*D21H 17/43* (2006.01) *C09D 7/02* (2006.01)
*C09D 17/00* (2006.01) *C08F 222/00* (2006.01)
*B01F 17/52* (2006.01)

(84) Etats contractants désignés:
**AT BE CH CY DE DK ES FI FR GB GR IE IT LI LU MC NL PT SE TR**

(30) Priorité: **15.06.2000 FR 0007639**

(62) Numéro(s) de document de la (des) demande(s) initiale(s) en application de l'article 76 CBE:
**01945395.0 / 1 294 476**

(71) Demandeur: **COATEX S.A.S.**
**69730 Genay (FR)**

(72) Inventeurs:
- **Suau, Jean-Marc**
  **69480 Lucenay (FR)**
- **Jacquemet, Christian**
  **69005 Lyon (FR)**
- **Mongoin, Jacques**
  **69550 Quincieux (FR)**
- **Gane, Patrick**
  **4852 Rothrist (CH)**

(74) Mandataire: **Richebourg, Michel François**
**Cabinet Michel Richebourg,**
**"Le Clos du Golf",**
**69, rue Saint-Simon**
**42000 Saint Etienne (FR)**

Remarques:
Cette demande a été déposée le 13 - 11 - 2006 comme demande divisionnaire de la demande mentionnée sous le code INID 62.

# (54) Utilisation de copolymères faiblement anioniques comme agent d'aide au broyage de suspension aqueuse de matières minérales, suspensions aqueuses obtenues et leurs utilisations

(57) L'invention concerne l'utilisation d'un copolymère faiblement anionique et hydrosoluble, comme agent d'aide au broyage de pigments et/ou charges minérales en suspension aqueuse donnant d'une part un faible potentiel Zéta aux suspensions aqueuses desdites charges et/ou pigments et d'autre part apportant une stabilisation électro-stérique desdites suspensions.

L'invention concerne également lesdites suspensions aqueuses de pigments et/ou charges minérales et leurs utilisations dans les domaines du papier, comme la fabrication ou le couchage du papier, des boues de forage mises en oeuvre pour la prospection ou l'extraction pétrolière.

L'invention concerne aussi l'utilisation desdits agents d'aide au broyage dans les domaines des peintures et des matières plastiques comme les résines thermoplastiques ou thermodurcissables.

EP 1 795 265 A2

## Description

La présente invention concerne le secteur technique des charges minérales, notamment pour les applications papetières, et leurs traitements appropriés afin d'améliorer soit le procédé de fabrication de la feuille de papier, soit ses propriétés.

L'invention concerne en premier lieu l'utilisation d'un copolymère faiblement anionique et hydrosoluble, comme agent d'aide au broyage de pigments et/ou charges minérales en suspension aqueuse donnant d'une part un faible potentiel Zéta aux suspensions aqueuses desdites charges et/ou pigments et d'autre part apportant une stabilisation électro-stérique desdites suspensions.

L'invention concerne également ledit agent faiblement anionique, hydrosoluble, d'aide au broyage de pigments et/ou charges minérales en suspension aqueuse donnant d'une part un faible potentiel Zéta aux suspensions aqueuses desdites charges et/ou pigments et d'autre part apportant une stabilisation électro-stérique desdites suspensions.

L'invention concerne également lesdites suspensions aqueuses de pigments et/ou charges minérales et leurs utilisations notamment dans les domaines du papier, comme entre autre la fabrication ou le couchage du papier, avec obtention en particulier de propriétés égales ou meilleures de la feuille, et notamment d'opacité, de brillance ou encore d'imprimabilité, ou bien encore notamment dans le domaine des boues de forage mises en oeuvre pour la prospection ou l'extraction pétrolière.

L'invention concerne aussi l'utilisation dudit agent d'aide au broyage faiblement anionique au domaine des peintures ou des matières plastiques comme les résines thermoplastiques ou encore thermodurcissables.
L'invention concerne enfin les papiers fabriqués et/ou couchés par la mise en oeuvre desdites suspensions aqueuses de pigments et/ou charges minérales ainsi que les boues de forage contenant lesdites suspensions aqueuses de pigments et/ou charges minérales.

En effet, lors de la fabrication du papier, il est de plus en plus habituel de remplacer une partie des fibres de cellulose, onéreuses, par des charges minérales et/ou pigments, meilleur marché, afin de réduire le coût du papier tout en améliorant, par exemple son opacité, sa blancheur ou encore ses propriétés d'imprimabilité.

Les charges minérales et/ou pigments tels que par exemple, le carbonate de calcium naturel ou synthétique, les dolomies, l'hydroxyde de magnésium, le kaolin, le talc, le gypse, l'oxyde de titane, ou encore l'hydroxyde d'aluminium sont normalement incorporés dans la feuille de papier au cours de sa formation sur la toile.

Ceci est réalisé en incorporant la charge minérale et/ou pigment sous forme, soit pulvérulente, soit de suspension aqueuse, à la pâte papetière de telle sorte que la pâte soit drainée sur la toile et que les particules de charges minérales et/ou pigments en suspension soit retenue dans la feuille fibreuse obtenue. Cette rétention n'étant pas totale pousse le papetier à utiliser des additifs chimiques et les fabricants de charges à mettre en oeuvre des agents de traitement de surface de ces matières minérales.

De même, lors du traitement de la feuille de papier par couchage, le papetier utilise dans sa formulation des matières minérales généralement mises en suspension, soit par le papetier lui-même, soit par le fabricant, à l'aide d'additifs anioniques tels que par exemple les polyacrylates ou les polyphosphates ou autres ou à l'aide d'additifs cationiques tels que par exemple les polyacrylates ou polyméthacrylates cationisés comme les méthacrylates de diméthyle-amino-éthyle quaternaires ou les résines mélamine-formol, les résines épichlorhydrine, les résines dicyandiamide ou autres.

Ainsi l'homme du métier connaît des agents d'aide au broyage ou des dispersants hydrosolubles (FR 2 488 814, FR 2 603 042, EP 0 100 947, EP 0 100 948, EP 0 129 329, EP 0 542 643, EP 0 542 644) de polymères et/ou copolymères de type anionique pour réaliser des suspensions aqueuses de pigments et/ou charges minérales. Mais celles-ci ont l'inconvénient de nécessiter l'ajout de composés cationiques pendant le processus de fabrication de la feuille de papier lorsqu'elles sont mises en oeuvre dans ces opérations de fabrication de la feuille, et d'aboutir à des papiers couchés d'opacité ne répondant pas à l'opacité requise par l'utilisateur final lorsqu'elles sont mises en oeuvre dans les opérations de couchage du papier.

D'autre part l'homme du métier connaît des agents d'aide au broyage ou des dispersants hydrosolubles (EP 0 281 134, EP 0 307 795) de polymères et/ou copolymères de type cationique pour réaliser des suspensions aqueuses de pigments et/ou charges minérales qui présentent le risque majeure d'une incompatibilité avec tout milieu anionique présent dans les formulations papetières, pouvant aller jusqu'à la prise en masse du milieu, bloquant ainsi toute la production.

Une autre solution est connue de l'homme du métier pour aboutir à des suspensions aqueuses de pigments et/ou charges minérales stables dans le temps et avec une concentration en matière sèche élevée en même temps qu'une fine granulométrie des particules.
Cette solution (WO 91/09067) consiste à utiliser des copolymères hydrosolubles amphotères comme agent, faiblement anionique, hydrosoluble, dispersant et/ou d'aide au broyage de pigments et/ou charges minérales. Cependant de tels copolymères présentent l'inconvénient d'être sensibles au pH et à la force ionique du milieu et d'être en outre facilement hydrolysables.

Ainsi, l'homme du métier se trouve confronté au problème d'obtenir des suspensions aqueuses de charges minérales et/ou pigments, affinées, stables dans le temps, moyennement à fortement concentrées en matière minérale, ne présentant aucun risque d'incompatibilité dans les formulations papetières, faiblement sensibles au pH et à la force ionique des milieux mis en oeuvre dans les formulations papetières ainsi qu'au problème d'obtenir des suspensions permettant d'aboutir à des propriétés de la feuille répondant aux critères de l'utilisateur final, problème qu'aucune des solutions à sa disposition ne permet de résoudre totalement.
Forte des inconvénients précités concernant les suspensions aqueuses anioniques ou cationiques ou encore des suspensions aqueuses obtenues à l'aide d'agents amphotères, la Demanderesse a trouvé de manière inattendue que la présence dans le copolymère d'au moins un monomère de formule (I)

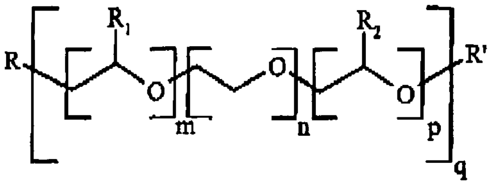

dans laquelle

- m et p représentent un nombre de motifs d'oxyde d'alkylène inférieur ou égal à 150,
- n représente un nombre de motifs d'oxyde d'éthylène inférieur ou égal à 150,
- q représente un nombre au moins égal à 1 et tels que

$$5 \leq (m+n+p)q \leq 150$$

$R_1$ l'hydrogène ou le radical méthyle ou éthyle
$R_2$ l'hydrogène ou le radical méthyle ou éthyle
R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques ou encore au groupe des amides éthyléniquement insaturés,
R' représente un radical hydrocarboné ayant 1 à 5 atomes de carbone
a permis la mise au point de copolymères hydrosolubles faiblement anioniques permettant la stabilisation électrostérique conduisant ainsi à l'obtention de suspensions aqueuses de pigments et/ou charges minérales résolvant les problèmes énoncés ci-dessus, c'est-à-dire conduisant, notamment à l'obtention de suspensions aqueuses de pigments et/ou charges minérales moyennement à fortement chargées en matière minérale, stables dans le temps, sans sédimentation, faiblement sensibles au pH et à la force ionique des milieux mis en oeuvre dans les formulations papetières ou pétrolières, et ayant un potentiel Zéta faible,

Ainsi, l'art antérieur décrit pour l'essentiel des agents dispersants et/ou d'aide au broyage, anioniques, cationiques ou amphotères ou faiblement anioniques hydrosolubles.
En effet la demande de brevet européen EP 0 870 784 décrit des agents faiblement anioniques, mais ces agents donnent des suspensions aqueuses à fort potentiel Zéta et ne permettent pas de résoudre le problème posé à l'utilisateur final,
**[0016]** Ainsi, selon l'invention, l'agent d'aide au broyage se distingue de l'art antérieur en ce qu'il se compose

a) d'au moins un monomère anionique et à fonction monocarboxylique

b) éventuellement d'au moins un monomère anionique à fonction dicarboxylique ou à fonction sulfonique ou phosphorique ou phosphonique ou leur mélange

c) d'au moins un monomère non ionique, le monomère non ionique étant constitué d'au moins un monomère de

formule (I):

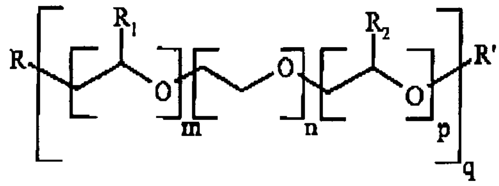

dans laquelle

- m et p représentent un nombre de motifs d'oxyde d'alkylène inférieur ou égal à 150,
- n représente un nombre de motifs d'oxyde d'éthylène inférieur ou égal à 150,
- q représente un nombre au moins égal à 1 et tels que

$$5 \leq (m+n+p)q \leq 150$$

$R_1$ l'hydrogène ou le radical méthyle ou éthyle
$R_2$ l'hydrogène ou le radical méthyle ou éthyle
R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques ou encore au groupe des amides éthyléniquement insaturés,
R' représente un radical hydrocarboné ayant 1 à 5 atomes de carbone

d) éventuellement d'un monomère du type acrylamide ou méthacrylamide ou leurs dérivés et leurs mélanges ou bien encore d'un ou plusieurs monomères non hydrosolubles tels que les acrylates ou méthacrylates d'alkyle, les vinyliques tels que l'acétate de vinyle, la vinylpyrrolidone, le styrène, l'alphaméthylstyrène et leurs dérivés, et

e) éventuellement d'au moins un monomère possédant au moins deux insaturations éthyléniques appelé dans la suite de la demande monomère réticulant

donnant les propriétés de faible potentiel Zéta et de stabilité électro-stérique aux suspensions.

Ces buts sont atteints grâce à l'utilisation comme agent d'aide au broyage d'un copolymère constitué :

a) d'au moins un monomère anionique à insaturation éthylénique et à fonction monocarboxylique

b) éventuellement d'au moins un monomère anionique à insaturation éthylénique et à fonction dicarboxylique ou sulfonique ou phosphorique ou phosphonique ou leur mélange

c) d'au moins un monomère non ionique de formule (I) et

d) éventuellement d'un monomère du type acrylamide ou méthacrylamide ou leurs dérivés et leurs mélanges ou bien encore d'un ou plusieurs monomères à insaturation éthylénique non hydrosolubles tels que les acrylates ou méthacrylates d'alkyle, les vinyliques tels que l'acétate de vinyle, la vinylpyrrolidone, le styrène, l'alphaméthylstyrène et leurs dérivés,

e) éventuellement d'au moins un monomère réticulant

le total des constituants a), b), c), d) et e) étant égal à 100 %, avec d'autre part la présence obligatoire de monomère de type a) pour pouvoir assurer la dispersion des matières minérales à haute et moyenne concentration en matière sèche et la présence obligatoire de monomère de type c) en combinaison avec le monomère de type a) pour assurer

la stabilisation électro-stérique des suspensions aqueuses de matières minérales à haute et moyenne concentration en matière sèche.

L'utilisation, selon l'invention, d'un copolymère faiblement anionique et hydrosoluble, comme agent d'aide au broyage de pigments et/ou charges minérales en suspension aqueuse se caractérise en ce que ledit copolymère est constitué:

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges,

b) éventuellement d'au moins un monomère anionique à insaturation éthylénique et à fonction dicarboxylique ou sulfonique ou phosphorique ou phosphonique ou leur mélange choisi parmi les monomères à insaturation éthylénique et à fonction dicarboxylique tels que l'acide crotonique, isocrotonique, cinnamique, itaconique, maléique, citraconique ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges

c) d'au moins un monomère à insaturation éthylénique non ionique de formule (I) :

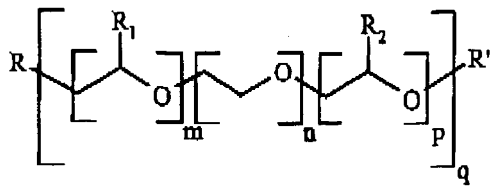

dans laquelle

- m et p représentent un nombre de motifs d'oxyde d'alkylène inférieur ou égal à 150,
- n représente un nombre de motifs d'oxyde d'éthylène inférieur ou égal à 150,
- q représente un nombre au moins égal à 1 et tels que

$$5 \leq (m+n+p)q \leq 150$$

$R_1$ l'hydrogène ou le radical méthyle ou éthyle
$R_2$ l'hydrogène ou le radical méthyle ou éthyle
R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques ou encore au groupe des amides éthyléniquement insaturés,
R' represente un radical hydrocarboné ayant 1 à 5 atomes de carbone

d) éventuellement d'un monomère du type acrylamide ou méthacrylamide ou leurs dérivés et leurs mélanges ou bien encore d'un ou plusieurs monomères non hydrosolubles tels que les acrylates ou méthacrylates d'alkyle, les vinyliques tels que l'acétate de vinyle, la vinylpyrrolidone, le styrène, l'alphaméthylstyrène et leurs dérivés,
et

e) éventuellement d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-methacrylamide, le tétrallyloxyéthane, les triallylcyanurates, les éthers allyliques obtenus à partir de polyols tels que le pentaérythritol, le sorbitol, le sucrose ou autres.

le total des constituants a), b), c), d) et e) étant égal à 100 %
et en ce que ledit copolymère possède une viscosité spécifique au plus égale à 10, préférentiellement au plus égale à 5 et très préférentiellement au plus égale à 2.

Plus particulièrement l'utilisation du copolymère précité est caractérisée en ce que ledit copolymère est constitué, exprimé en poids :

a) de 2 % à 85 % et encore plus particulièrement de 2 % à 80 % d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges,

b) de 0 % à 80 % et encore plus particulièrement de 0 % à 50 % et très particulièrement de 0 % à 20 % d'au moins un monomère anionique à insaturation éthylénique et à fonction dicarboxylique ou sulfonique ou phosphorique ou phosphonique ou leur mélange choisi parmi les monomères à insaturation éthylénique et à fonction dicarboxylique tels que l'acide crotonique, isocrotonique, cinnamique, itaconique, maléique, citraconique ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphoniquc tels que l'acide vinyl phosphonique, ou leurs mélanges

c) de 20 % à 95 % d'au moins un monomère à insaturation éthylénique non ionique de formule (I):

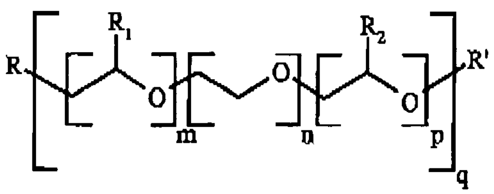

dans laquelle

- m et p représentent un nombre de motifs d'oxyde d'alkylène inférieur ou égal à 150,
- n représente un nombre de motifs d'oxyde d'éthylène inférieur ou égal à 150,
- q représente un nombre au moins égal à 1 et tels que

$$5 \leq (m+n+p)q \leq 150$$

$R_1$ l'hydrogène ou le radical méthyle ou éthyle
$R_2$ l'hydrogène ou le radical méthyle ou éthyle

R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, α-α' diméthyl-isopropényl-boezyluréthanne, allyluréthanne, de même qu'au groupe des éthers allyliques ou vinyliques ou encore au groupe des amides éthyléniquement insaturés,

R' représente un radical hydrocarboné ayant 1 à 5 atomes de carbone

d) de 0 % à 50 % d'un monomère du type acrylamide ou méthacrylamide ou leurs dérivés et leurs mélanges ou bien encore d'un ou plusieurs monomères non hydrosolubles tels que les acrylates ou méthacrylates d'alkyle, les vinyliques tels que l'acétate de vinyle, la vinylpyrrolidone, le styrène, l'alphaméthylstyrène et leurs dérivés,

e) de 0 % à 3 % d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthytène-bis-méthacrylamide, le tétrallyloxyéthane, les triallylcyanurates, les éthers allyliques obtenus à partir de polyols tels que le pentaérythritol, le sorbitol, le sucrose ou autres.
le total des constituants a), b), c), d) et e) étant égal à 100 %
et en ce que ledit copolymère possède une viscosité spécifique au plus égale à 10,
préférentiellement au plus égale à 5 et très préférentiellement au plus égale à 2.

De manière encore plus préférentielle, l'utilisation du copolymère est caractérisée en ce que

a) le monomère anionique à insaturation éthylénique et à fonction monacarboxylique est préférentiellement choisi parmi les monomères à insaturation éthylénique et à fonction monocarboxylique tels que l'acide acrylique ou méthacrylique.

b) le monomère anionique à insaturation éthylénique et à fonction dicarboxylique ou sulfonique ou phosphorique ou phosphonique ou leur mélange est préférentiellement choisi parmi les monomères à insaturation éthylénique et à fonction dicarboxylique tels que les diacides parmi lesquels l'acide itaconique ou maléique ou bien encore choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou leurs mélanges

c) le monomère à insaturation éthylénique non ionique de formule (I) est tel que
$R_1$ représente l'hydrogène ou le radical méthyle ou éthyle
$R_2$ représente l'hydrogène ou le radical méthyle ou éthyle
R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques ou encore au groupe des amides éthyléniquement insaturés,
R' représente un radical hydrocarboné ayant 1 à 5 atomes de carbone

d) le monomère du type acrylamide ou méthacrylamide ou leurs dérivés est choisi parmi l'acrylamide ou le méthacrylamide, et le monomère non hydrosoluble est choisi parmi l'acrylate d'éthyle ou le styrène

e) le réticulant est choisi parmi le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres.

Le copolymère utilisé selon l'invention est obtenu par des procédés connus de copolymérisation radicalaire en solution, en émulsion directe ou inverse, en suspension ou précipitation dans des solvants appropriés, en présence de systèmes catalytiques et d'agents de transfert connus.
Ce copolymère obtenu sous forme acide et éventuellement distillé, peut être également partiellement ou totalement neutralisé par un ou plusieurs agents de neutralisation disposant d'une fonction neutralisante monovalente ou d'une fonction neutralisante polyvalente tels que par exemple pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

Chaque agent de neutralisation intervient alors selon des taux de neutralisation propres à chaque fonction de valence.

Selon une autre variante, le copolymère issu de la réaction de copolymérisation peut éventuellement avant ou après la réaction de neutralisation totale ou partielle, être traité et séparé en plusieurs phases, selon des procédés statiques ou dynamiques connus de l'homme de l'art, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

L'une des phases correspond alors au copolymère utilisé selon l'invention comme agent d'aide au broyage de matières minérales en suspension aqueuse.

La viscosité spécifique du copolymère est symbolisée par la lettre η et est déterminée de la manière suivante:

On prend une solution de polymérisat de façon à obtenir une solution correspondant à 2,5 g de polymère sec neutralisé à la soude et à 50 ml d'une solution d'eau bipermutée. Puis, on mesure avec un viscosimètre capillaire de constante de Baume égale à 0,000105 placé dans un bain thermostaté à 25°C le temps d'écoulement d'un volume donné de la solution précitée contenant le copolymère, ainsi que le temps d'écoulement du même volume de la solution d'eau bipermutée dépourvue dudit copolymère. Il est alors possible de définir la viscosité spécifique η grâce à la relation suivante :

$$\eta = \frac{\text{(temps d'écoulement de la solution de polymère)} - \text{(temps d'écoulement de la solution d'eau permutée)}}{\text{temps d'écoulement de la solution d'eau permutée}}$$

Le tube capillaire est généralement choisi de telle manière que le temps d'écoulement de la solution d'eau permutée dépourvue de copolymère soit d'environ 60 à 100 secondes, donnant ainsi des mesures de viscosité spécifique d'une très bonne précision,

L'invention concerne aussi ledit agent faiblement anionique, hydrosoluble, d'aide au broyage de pigments et/ou charges minérales en suspension aqueuse donnant d'une part un faible potentiel Zéta aux suspensions aqueuses desdites charges et/ou pigments et d'autre part apportant une stabilisation électro-stérique desdites suspensions. Cedit agent se caractérise en ce qu'il est le copolymère précédemment décrit.

Les suspensions aqueuses de charges et/ou pigments selon l'invention, se caractérisent en ce qu'elles contiennent ledit agent et plus particulièrement en ce qu'elles contiennent de 0,05 % à 5 % en poids sec dudit agent par rapport au poids sec total des charges et/ou pigments, et encore plus particulièrement 0,3 % à 1,0 % en poids sec dudit agent par rapport au poids sec total des charges et/ou pigments.

Elles se caractérisent également en ce que la charge et/ou pigment est choisi parmi le carbonate de calcium naturel tel que notamment la calcite, la craie ou encore le marbre, le carbonate de calcium synthétique encore appelé carbonate de calcium précipité, les dolomies, l'hydroxyde de magnésium, le kaolin, le talc, le gypse, l'oxyde de titane, ou encore l'hydroxyde d'aluminium ou toute autre charge et/ou pigment habituellement mis en oeuvre dans le domaine papetier ou pétrolier.

Elles se caractérisent enfin en ce qu'elles sont faiblement sensibles au pH et à la force ionique des milieux et en ce qu'elles ont un potentiel Zéta faible, c'est-à-dire un potentiel Zéta compris entre 0 et -30 mV et préférentiellement entre 0 et -20 mV.

Les papiers fabriqués et/ou couchés selon l'invention se caractérisent en ce qu'ils contiennent les dites suspensions aqueuses de charges et/ou pigments selon l'invention.

Les boues de forage selon l'invention se caractérisent en ce qu'elles contiennent lesdites suspensions aqueuses de charges et/ou pigments selon l'invention.

En pratique, selon une option techniquement originale et qui fera l'objet d'une demande divisionnaire distincte, l'opération de délitage encore appelée opération de dispersion de la substance minérale à disperser peut s'effectuer de deux manières différentes.

Une des manières consiste à réaliser sous agitation la préparation d'une suspension de charge et/ou pigment minéral en introduisant tout ou partie d'un agent dispersant dans la phase aqueuse, puis le matériau minéral, de manière à obtenir une suspension aqueuse moyennement à fortement chargée en matière minérale, stables dans le temps, sans sédimentation, faiblement sensible au pH et à la force ionique des milieux mis en oeuvre dans les formulations papetières, et ayant un potentiel Zéta faible, c'est-à-dixe un potentiel Zéta compris entre 0 et -30 mV et préférentiellement entre 0 et -20 mV.

Une autre des manières consiste à préparer la suspension de charge et/ou pigment minéral en introduisant dans le gâteau de charge et/ou pigment minéral la totalité de la quantité d'agent dispersant à tester de manière à obtenir une suspension aqueuse moyennement à fortement chargée en matière minérale, stables dans le temps, sans sédimentation, faiblement sensible au pH et à la force ionique des milieux mis en oeuvre dans les formulations papetières, et ayant un potentiel Zéta faible, c'est-à-dire un potentiel Zéta compris entre 0 et -30 mV et préférentiellement entre 0 et -20 mV.

Cette opération de délitage peut être consécutive à l'opération de broyage décrite ci-après ou bien peut être mise en oeuvre de manière totalement indépendante.

Ainsi, en pratique, l'opération de broyage de la substance minérale à affiner consiste à broyer la substance minérale avec un corps broyant en particules très fines dans un milieu aqueux contenant l'agent d'aide au broyage.

A la suspension aqueuse de la substance minérale à broyer, on ajoute le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donnés par le brevet FR 2 303 681 qui décrit des éléments broyants formés 30 % à 70 % en poids d'oxyde de zirconium, 0,1 % à 5 % d'oxyde d'aluminium et de 5 à 20 % d'oxyde de silicium.

Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments.

Le temps nécessaire pour aboutir à la finesse souhaitée de la substance minérale après broyage varie selon la nature et la quantité des substances minérales à broyer, et selon le mode d'agitation utilisé et la température du milieu pendant l'opération de broyage.

Les suspensions aqueuses ainsi obtenues peuvent être utilisées dans le domaine du papier en charge de masse ou en couchage avec un potentiel Zéta faible.

Pendant la fabrication de la feuille de papier, c'est-à-dire pendant leur utilisation comme charge de masse, ces suspensions peuvent être mises en oeuvre avec les cassés de couchage.

Elles peuvent être également mises en oeuvre dans le domaine des boues de forage telles que par exemple les boues douces bentonitiques, les boues salées saturées et les boues à l'eau de mer.

La portée et l'intérêt de l'invention seront mieux perçus grâce aux exemples suivants qui ne sauraient être limitatifs.

<u>EXEMPLE 1</u>

Cet exemple concerne la préparation d'une suspension de carbonate de calcium par simple délitage et la mise en évidence des propriétés apportées par la présence dans le monomère non ionique d'au moins un monomère de formule (I).

A cet effet pour chacun des essais suivants, effectués à partir d'un gâteau de filtration de marbre dont 73 % des particules ont un diamètre inférieur à un micromètre déterminé par la mesure Sedigraph™ 5100 de la société Micromeritics, on prépare la suspension aqueuse de marbre par introduction, dans le gâteau de la quantité nécessaire en poids sec d'agent de dispersion à tester par rapport au poids sec dudit gâteau à mettre en suspension pour obtenir une suspension aqueuse de carbonate de calcium à une concentration en matière sèche égale à 61 %.

Après 20 minutes d'agitation, on récupère dans un flacon un échantillon de la suspension de carbonate de calcium obtenue et on en mesure la viscosité Brookfield™ à l'aide d'un viscosimètre Brookfield™ type RVT, à une température de 25°C et une vitesse de rotation de 10 et 100 tours par minute avec le mobile adéquat.

Après un temps de 8 jours dans le flacon, la viscosité Brookfield™ de la suspension est mesurée par introduction, dans le flacon non agité, du mobile adéquat du viscosimètre Brookfield™ type RVT, à une température de 25°C et une vitesse de rotation de 10 tours et 100 tours par minute (viscosité AVAG = viscosité Brookfield™ avant agitation).

Les mêmes mesures de viscosité Brookfield™ sont également effectuées une fois le flacon agité et constituent les résultats de viscosité Brookfield™ après agitation (viscosité APAG).

Pour la mesure du potentiel Zéta, on récupère également, après les 20 minutes d'agitation, un échantillon de la suspension de carbonate de calcium obtenue et on en disperse quelques gouttes dans une quantité suffisante de sérum obtenu par filtration mécanique de ladite suspension afin d'obtenir une suspension colloïdale à peine turbide.

Cette suspension est introduite dans la cellule de mesure du Zétamètre Zétamaster S de la société Malvern qui affiche directement la valeur du potentiel Zéta en mV.

Ces différentes mesures ont été effectuées pour les essais suivants.

Essai n° 1:

Cet essai, illustrant l'art antérieur, met en oeuvre 0,7 % en poids sec d'un polyacrylate de sodium de viscosité spécifique égale à 4,80.

Essai n° 2 :

Cet essai, illustrant l'art antérieur, met en oeuvre 0,7 % en poids sec d'un copolymère acide acrylique-anhydride maléique neutralisé à 100 % par la soude et de viscosité spécifique égale à 1,38.

Essai n° 3:

Cet essai, illustrant un domaine hors de l'invention, met en oeuvre 0,7 % en poids sec d'un homopolymère, de viscosité spécifique égale à 0,91 et dont le seul monomère est un monomère de formule (I) dans laquelle:

$R_1$ représente l'hydrogène

$R_2$ représente l'hydrogène

R représente le groupe méthacrylate

R'représente le radical méthyle

avec (m+n+p)q = 45,

Essai n° 4:

Cet essai, illustrant l'invention, met en oeuvre 0,7 % en poids sec d'un polymère neutralisé à 100 % par la soude, de viscosité spécifique égale à 1,28 et constitué de :

a) 8,0 % en poids d'acide acrylique comme monomère anionique à fonction monocarboxylique

b) 5,5 % en poids de phosphate de méthacrylate d'éthylène glycol comme monomère anionique à fonction phosphorique

c) 82,0 % en poids d'un monomère de formule (I) dans laquelle :

$R_1$ représente l'hydrogène

$R_2$ représente l'hydrogène

R représente le groupe méthacryluréthanne

R' représente le radical méthyle

d) 4,5 % en poids d'acrylate d'éthyle
avec (m+n+p)q= 113.

Essai n° 5 :

Cet essai, illustrant l'invention, met en oeuvre 0,7 % en poids sec d'un polymère neutralisé à 100 % par la soude, de viscosité spécifique égale à 0,78 et constitué de :

a) 8,0 % en poids d'acide acrylique comme monomère anionique à fonction monocarboxylique

b) 5,5 % en poids de phosphate de méthacrylate d'éthylène glycol comme monomère anionique à fonction phosphorique

c) 75,0 % en poids d'un monomère de formule (1) dans laquelle

$R_1$ représente l'hydrogène

$R_2$ représente l'hydrogène

R représente le groupe méthacryluréthanne

R' représente le radical méthyle

d) 11,5 % en poids d'acrylate d'éthyle
avec (m+n+p)q= 40.

Essai n° 6 :

Cet essai, illustrant l'invention, met en oeuvre 0,7 % en poids sec d'un polymère neutralisé à 100 % par la soude, de viscosité spécifique égale à 0,51 et constitué de :

a) 8,0 % en poids d'acide acrylique comme monomère anionique à fonction monocarboxylique

b) 5,5 % en poids de phosphate de méthacrylate d'éthylène glycol comme monomère anionique à fonction phosphorique

c) 71,0 % en poids d'un monomère de formule (I) dans laquelle

$R_1$ représente l'hydrogène

$R_2$ représente l'hydrogène

R représente le groupe méthacryluréthanne

R' représente le radical méthyle

d) 15,5% en poids d'acrylate d'éthyle
avec (m+n+p)q= 25.

Essai n° 7 :

Cet essai, illustrant l'invention, met en oeuvre 0,7 % en poids sec d'un polymère neutralisé à 100 % par la soude, de viscosité spécifique égale à 0,51 et constitué de :

a) 8,0 % en poids d'acide acrylique comme monomère anionique à fonction monocarboxylique

b) 5,5 % en poids de phosphate de méthacrylate d'éthylène glycol comme monomère anionique à fonction phosphorique

c) 67,0 % en poids d'un monomère de formule (I) dans laquelle

$R_1$ représente l'hydrogène

$R_2$ représente l'hydrogène

R représente le groupe méthacryluréthanne

R' représente le radical méthyle

d) 19,5 % en poids d'acrylate d'éthyle
avec (m+n+p)q= 17.

Essai n° 8 :

Cet essai, illustrant l'invention, met en oeuvre 0,6 % en poids sec d'un polymère neutralisé à 100 % par la soude, de viscosité spécifique égale à 1,56 et constitué de :

a) 2,0 % en poids d'acide méthacrylique comme monomère anionique à fonction monocarboxylique

b) 13,0 % en poids de phosphate de méthacrylate d'éthylène glycol comme monomère anionique à fonction phosphorique

c) 85,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 113.

Essai n° 9 :

Cet essai, illustrant l'invention, met en oeuvre 0,6 % en poids sec d'un polymère neutralisé à 100 % par la soude, de viscosité spécifique égale à 0,97 et constitué de :

a) 3,2 % en poids d'acide méthacrylique comme monomère anionique à fonction monocarboxylique

b) 13,5 % en poids de phosphate de méthacrylate d'éthylène glycol comme monomère anionique à fonction phosphorique

c) 83,3 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 45.

Essai n° 10 :

Cet essai, illustrant l'invention, met en oeuvre 0,6 % en poids sec d'un polymère neutralisé à 100 % par la soude, de viscosité spécifique égale à 0,96 et constitué de :

a) 8,5 % en poids d'acide méthacrylique comme monomère anionique à fonction monocarboxylique

b) 13,5 % en poids de phosphate de méthacrylate d'éthylène glycol comme monomère anionique à fonction phosphorique

c) 78,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 17.

Essai n° 11 :

Cet essai, illustrant l'invention, met en oeuvre 0,6 % en poids sec d'un polymère neutralisé à 100 % par la soude, de viscosité spécifique égale à 1,07 et constitué de :

a) 17,0 % en poids d'acide méthacrylique comme monomère anionique à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q = 45.

Essai n° 12 :

Cet essai, illustrant l'invention, met en oeuvre 0,7 % en poids sec d'un polymère neutralisé à 100 % par la soude, de viscosité spécifique égale à 1,04 et constitué de :

a) 3,2 % en poids d'acide méthacrylique et 13,0 % en poids d'acide acrylique comme monomères anioniques à fonction monocarboxylique

b) 8,0 % en poids d'acide acrylamido-méthyl-propane-sulfonique comme monomère anionique à fonction sulfonique

c) 75,8 % en poids d'un monomère de formule (I) dans laquelle

$R_1$ représente l'hydrogène

$R_2$ représente l'hydrogène

R représente le groupe méthacrylate

R'représente le radical méthyle
avec (m+n+p)q= 45.

Essai n° 13 :

Cet essai, illustrant l'invention, met en oeuvre 0,7 % en poids sec d'un polymère neutralisé à 100 % par 1a soude, de viscosité spécifique égale à 1,47 et constitué de :

a) 3,3 % en poids d'acide méthacrylique et 13,0 % en poids d'acide acrylique comme monomères anioniques à fonction monocarboxylique

b) 5,0 % en poids d'acide itaconique comme monomère anionique à fonction dicarboxylique

c) 78,7 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 45.

Essai n° 14 :

Cet essai, illustrant l'invention, met en oeuvre 0,7 % en poids sec d'un polymère neutralisé à 100 % par la soude, de viscosité spécifique égale à 1,38 et constitué de :

a) 0,8 % en poids d'acide méthacrylique et 79,3 % en poids d'acide acrylique comme monomères anioniques à fonction monocarboxylique
b) 19,9 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 45.

Essai n° 15

Cet essai, illustrant l'invention, met en oeuvre 0,7 % en poids sec d'un polymère neutralisé à 100 % par la soude, de viscosité spécifique égale à 1,38 et constitué de :

a) 0,4 % en poids d'acide méthacrylique et 79,6 % en poids d'acide acrylique comme monomères anioniques à fonction monocarboxylique

b) 20,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 113.

Essai n° 16 :

Cet essai, illustrant l'invention, met en oeuvre 0,7 % en poids sec d'un polymère neutralisé à 100 % par la soude, de viscosité spécifique égale à 1,28 et constitué de :

a) 35,0 % en poids d'acide acrylique comme monomère anionique à fonction monocarboxylique

b) 20,0 % en poids d'un monomère de formule (I) dans laquelle

$R_1$ représente l'hydrogène

$R_2$ représente l'hydrogène

R représente le groupe méthacryluréthanne

R’ représente le radical méthyle

c) 45,0 % en poids d’acrylamide
avec (m+n+p)q= 17.

Essai n° 17 :

Cet essai, illustrant l’invention, met en oeuvre 0,7 % en poids sec d’un polymère neutralisé à 100 % par la soude, de viscosité spécifique égale à 1,03 et constitué de :

a) 35,0 % en poids d’acide acrylique comme monomère anionique à fonction monocarboxylique

b) 20,0 % en poids d’un monomère de formule (I) dans laquelle

$R_1$ représente l’hydrogène

$R_2$ représente l’hydrogène

R représente le groupe méthacrylate

R’ représente le radical méthyle

c) 45,0 % en poids d’acrylamide
avec (m+n+p)q= 45.

Essai n° 18 :

Cet essai, illustrant l’invention, met en oeuvre 0,7 % en poids sec d’un polymère neutralisé à 100 % par la soude, de viscosité spécifique égale à 1,65 et constitué de :

a) 15,0 % en poids d’acide méthacrylique et 12,0 % en poids d’acide acrylique comme monomères anioniques à fonction monocarboxylique

b) 73,0 % en poids d’un monomère de formule (I) dans laquelle

$R_1$ représente l’hydrogène

$R_2$ représente l’hydrogène

R représente le groupe méthacrylate

R’représente le radical méthyle
avec (m+n+p)q = 8.

Essai n° 19 :

Cet essai, illustrant l’invention, met en oeuvre 0,7 % en poids sec d’un polymère neutralisé à 100 % par la soude, de viscosité spécifique égale à 1,38 et constitué de :

a) 3,4 % en poids d’acide méthacrylique et 13,5 % en poids d’acide acrylique comme monomères anioniques à fonction monocarboxylique

b) 82,1 % en poids d’un monomère de formule (I) dans laquelle

$R_1$ représente l’hydrogène

$R_2$ représente l'hydrogène

R représente le groupe méthacrylate

R' représente le radical méthyle

c) 1,0 % en poids d' EDMA comme monomère réticulant
avec (m+n+p)q= 45.

Essai n° 20 :

Cet essai, illustrant l'invention, met en oeuvre 0,7 % en poids sec d'un polymère neutralisé à 100 % par la soude, de viscosité spécifique égale à 1,16 et constitué de :

a) 3,9 % en poids d'acide méthacrylique et 1,1% en poids d'acide acrylique comme monomères anioniques à fonction monocarboxylique

b) 95,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 45.

Essai n° 21 :

Cet essai, illustrant l'invention, met en oeuvre 0,7 % en poids sec d'un polymère neutralisé à 100 % par la soude, de viscosité spécifique égale à 1,07 et constitué de :

a) 0,8 % en poids d'acide méthacrylique et 79,2% en poids d'acide acrylique comme monomères anioniques à fonction monocarboxylique

b) 20,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 45.

Essai n° 22 :

Cet essai, illustrant l'invention, met en oeuvre 0,7 % en poids sec d'un polymère neutralisé à 100 % par la soude, de viscosité spécifique égale à 1,28 et constitué de :

a) 1,7 % en poids d'acide méthacrylique et 13,2 % en poids d'acide acrylique comme monomères anioniques à fonction monocarboxylique

b) 85,6 % en poids d'un monomère de formule (I) dans laquelle

$R_1$ représente l'hydrogène

$R_2$ représente l'hydrogène

R représente le groupe méthacrylate

R' représente le radical propyle
avec (m+n+p)q = 64.

Essai n° 22 bis :

Cet essai, illustrant l'invention, met en oeuvre 0,7 % en poids sec d'un polymère neutralisé à 100 % par la soude, de viscosité spécifique égale à 0,68 et constitué de ;

a) 45 % en poids d'acide acrylique comme monomère anionique à fonction monocarboxylique

b) 35 % en poids d'acide acrylamido-méthyl-propane-sulfonique comme monomère anionique à fonction sulfonique

c) 20 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q = 17.

Tous les résultats expérimentaux sont consignés dans les tableaux 1a à 1d suivants,

TABLEAU 1a

| | ESSAI N° | MONOMERES CONSTITUANTS | VISCOSTIE SPECIFIQUE | VISCOSITE BROOKFIELD (mPa.s) | | | | | | POTENTIEL ZETA (mV) |
|---|---|---|---|---|---|---|---|---|---|---|
| | | | | INITIALE | | 8 j AVANT AGITATION | | 8j APRES AGITATION | | |
| | | | | 10 T/min | 100T/min | 10 T/min | 100T/min | 10 T/min | 100T/min | |
| Art Antérieur | 1 | 100% A A | 4,80 | 1000 | 280 | 6000 | 1500 | 1000 | 300 | -50,6 |
| Art Antérieur | 2 | 79% A A<br>30% Anhydride maléique | 1,38 | 180 | 110 | 2000 | 500 | 400 | 150 | -50,7 |
| Domaine Hors invention | 3 | 100% M. méthoxy PEG 2000 | 0,91 | 2400 | 1600 | Viscosité trop élevée non mesurable | | | | |
| Invention | 4 | 8,0% A A<br>5,5 % PO4MAEG<br>82,0% MU méthoxy PEG 5000<br>4,5% A E | 1,28 | 4680 | 830 | 2000 | 600 | 1000 | 440 | -20,2 |
| Invention | 5 | 8,0% A A<br>5,5 % PO4MAEG<br>75,0% MU méthoxy PEG 1800<br>11,5 % AB | 0,78 | 3960 | 1044 | 7600 | 960 | 4000 | 840 | -16,8 |

(suite)

| | ESSAI N° | MONOMERES CONSTITUANTS | VISCOSTIE SPECIFIQUE | VISCOSITE BROOKFIELD (mPa.s) | | | | | | POTENTIEL ZETA (mV) |
|---|---|---|---|---|---|---|---|---|---|---|
| | | | | INITIALE | | 8 j AVANT AGITATION | | 8j APRES AGITATION | | |
| | | | | 10 T/min | 100T/min | 10 T/min | 100T/min | 10 T/min | 100T/min | |
| Invention | 6 | 8.0% AA<br>% PO4MAEG<br>5,5 % 804MAEG<br>71,05 MU méthoxy PEG 1100<br>15,5 % AE | 0,51 | 1860 | 455 | 3200 | 1140 | 1450 | 520 | -20,7 |

AA = Acide acrylique. AE = Acrylate d'éthyle.
MU méthoxy PEG 1100 = Méthacryluréthanne de méthoxy polyéthylène glycol de poids moléculaire 1100.
M méthoxy PEG 2000 = Méthacrylate de méthoxy polyéthylène glycol de poids moléculaire 2000.
PO4MAEG = Phosphate de méthacrylate d'éthylène glycol.
MU méthoxy PBG 1800 = Méthacryluréthanne de méthoxy polyéthylène glycol de poids moléculaire 1800.
AMPS = Acide acrylamido-méthyl-propane-sulfonique
MU méthoxy PEG 5000 = Méthacryluréthanne de méthoxy polyéthylène glycol de poids moléculaire 5000.

**TABLEAU 1b**

| | ESSAI N° | MONOMERES CONSTITUANTS | VISCOSITE SPECIFIQUE | VISCOSITE BROOKFIELD (mPa·s) | | | | | | POTENTIEL ZETA (mV) |
|---|---|---|---|---|---|---|---|---|---|---|
| | | | | INITIALE | | 8 j AVANT AGITATION | | 8 j APRES AGITATION | | |
| | | | | 10 T/min | 100T/min | 10T/min | 100T/min | 10 T/min | 100T/min | |
| Invention | 7 | 8,0% A A<br>5,5 % PO4MAEG<br>67,0% MU méthoxy PEG 750<br>19,5% AE | 0,51 | 7600 | 968 | 9300 | 1500 | 7300 | 1540 | -23,3 |
| Invention | 8 | 2,0% AMA<br>13,0 % PO4MAEG<br>85,0 % M méthoxy PEG 5000 | 1,56 | 1800 | 500 | 3200 | 800 | 1300 | 450 | -7,3 |
| Invention | 9 | 3,2 % AMA<br>13,5 % PO4MAEG<br>83,3 % M méthoxy PEG 2000 | 0,97 | 750 | 330 | 3000 | 500 | 700 | 240 | -12,6 |
| Invention | 10 | 8,5% AMA<br>13,5% PO4MAEG<br>78,0% M méthoxy PEG 750 | 0,96 | 1200 | 280 | 5600 | 920 | 1700 | 370 | -25,2 |
| Invention | 11 | 17,0% AMA<br>83,0% M méthoxy PEG 2000 | 1,07 | 1700 | 550 | 1360 | 750 | 1980 | 650 | -16,5 |

(suite)

| | ESSAI N° | MONOMERES CONSTITUANTS | VISCOSITE SPECIFIQUE | VISCOSITE BROOKFIELD (mPa·s) | | | | | | POTENTIEL ZETA (mV) |
|---|---|---|---|---|---|---|---|---|---|---|
| | | | | INITIALE | | 8 j AVANT AGITATION | | 8 j APRES AGITATION | | |
| | | | | 10 T/min | 100T/min | 10T/min | 100T/min | 10 T/min | 100T/min | |
| Invention | 12 | 3.2% AMA<br>13,0% A A<br>8,0% AMPS<br>75,8% M méthoxy PEG 2000 | 1,04 | 2800 | 790 | 3000 | 900 | 2100 | 530 | -18,7 |

AA = Acide acrylique AE = Acrylate d'éthyle.
AMA = Acide méthacrylique.
MU méthoxy PEG 750 = Méthacryluréthanne de méthoxy polyéthylène glycol de poids moléculaire 750.
M méthoxy PEG 2000 = Méthacrylate de méthoxy polyéthylène glycol de poids moléculaire 2000.
PO4MAEG = Phosphate de méthacrylate d'éthylène glycol.
AMPS = Acide acrylamido-méthyl-propane-sulfonique
M méthoxy PEG 5000 = Méthacrylate de méthoxy polyéthylène glycol de poids moléculaire 5000.

TABLEAU 1c

| | ESSAI N° | MONOMERES CONSTITUANTS | VISCOSITE SPECIFIQUE | VISCOSITE BROOKFIELD (mPa.s) | | | | | | POTENTIEL ZETA (mV) |
|---|---|---|---|---|---|---|---|---|---|---|
| | | | | INITIALE | | 8j AVANT AGITATION | | 8j APRES AGITATION | | |
| | | | | 10 T/min | 100T/min | 10 T/min | 100T/min | 10 T/min | 200T/min | |
| Invention | 13 | 3,3% AMA<br>13,0% A A<br>5,0% AITC<br>78,7% M méthoxy PEG 2000 | 1,47 | 1100 | 330 | 6000 | 1000 | 1900 | 570 | -10,9 |
| Invention | 14 | 0,8% AMA<br>79,3% AA<br>19.99% M méthoxy PEG 2000 | 1,38 | 7000 | 1000 | 8000 | 1100 | 6000 | 810 | -27,5 |
| Invention | 15 | 0,4% AMA<br>79.6% A A<br>20,0% M méthoxy PEG 5000 | 1,38 | 6800 | 900 | 8000 | 1080 | 5600 | 800 | -24,5 |
| Invention | 16 | 35,0% A A<br>20,0% MU méthoxy PEG750<br>45,0% Acrylamide | 1,28 | 7400 | 1020 | 9100 | 1340 | 7240 | 1040 | -29,8 |
| Invention | 17 | 35,0% A A<br>20,0% M méthoxy PEG 2000<br>45,0 % Acrylamide | 1,03 | 8000 | 1060 | 11800 | 1630 | 7500 | 1080 | -25,7 |

(suite)

| | ESSAI N° | MONOMERES CONSTITUANTS | VISCOSITE SPECIFIQUE | VISCOSITE BROOKFIELD (mPa.s) | | | | | | POTENTIEL ZETA (mV) |
|---|---|---|---|---|---|---|---|---|---|---|
| | | | | INITIALE | | 8j AVANT AGITATION | | 8j APRES AGITATION | | |
| | | | | 10 T/min | 100T/min | 10 T/min | 100T/min | 10 T/min | 200T/min | |
| Invention | 18 | 15,0% AMA<br>12,0% A A<br>73,0% M méthoxy PEG 350 | 1,65 | 2200 | 650 | 7000 | 1150 | 1600 | 380 | -29,8 |

AA = Acide acrylique.
AMA = Acide méthacrylique.
MU méthoxy PEG 750 = Méthacryluréthanne de méthoxy polyéthylène glycol de poids moléculaire 750.
M méthoxy PEG 2000 = Méthacryluréthanne de méthoxy polyéthylène glycol de poids moléculaire 2000.
M méthoxy PEG 350 = Méthacrylate de méthoxy polyéthylène glycol de poids moléculaire 350.
AITC = Acide itaconique.
AMPS = Acide acrylamido-méthyl-propane-sulfonique
M méthoxy PEG 5000 = Méthacrylate de méthoxy polyéthylène glycol de poids moléculaire 5000.

TABLEAU 1d

| | ESSAI N° | MONOMERES CONSTITUANTS | VISCOSITE SPECIFIQUE | VISCOSITE BROOKFIELD (mPa.s) | | | | | | POTENTIEL ZETA (mV) |
|---|---|---|---|---|---|---|---|---|---|---|
| | | | | INITIALE | | 8jAVANT AGITATION | | 8jAPRES AGITATION | | |
| | | | | 10 T/min | 100T/min | 10 T/min | 100T/min | 10 T/min | 100T/min | |
| Invention | 19 | 3,4 % AMA<br>13,5% A A<br>82,1% M méthoxy PEG 2000<br>1,0% EDMA | 1,38 | 3400 | 650 | 1200 | 2000 | 2100 | 520 | -12,5 |
| Invention | 20 | 3,9 % AMA<br>1,1% A A<br>95,0% M méthoxy PEG 2000 | 1,16 | 9000 | 3600 | 11000 | 4250 | 5150. | 2000 | -12,5 |
| Invention | 21 | 0,8% AMA<br>79,2% A A<br>20,0% M méthoxy PEG 2000 | 1,07 | 9400 | 1080 | 9000 | 1250 | 8050 | 1150 | -20,3 |
| Invention | 22 | 1,7% AMA<br>13,2% AA<br>85,6% M propoxy PEG 2800 | 1,28 | 11200 | 1440 | 12000 | 2100 | 9000 | 1200 | -16,5 |

AA = Acide acrylique.
AMA = Acide méthacrylique.
M méthoxy PEG 2000 = Méthacrylate de méthoxy polyéthylène glycol de poids moléculaire 2000.
M propoxy PEG 2800 = Méthacrylate de propoxy polyéthylène glycol de poids moléculaire 2800.

La lecture des tableaux 1a à I d permet de mettre en évidence que l'utilisation de copolymère selon l'invention contenant comme monomère non ionique au moins un monomère de formule (I) aboutit à l'obtention de suspensions aqueuses de pigments et/ou charges minérales, selon l'invention, moyennement à fortement chargées en matière minérale, stables dans le temps et ayant un potentiel Zéta faible.

EXEMPLE 2

Cet exemple a pour but d'illustrer différents taux d'utilisation d'agent dispersant selon l'invention.

Dans ce but avec le même mode opératoire et le même matériel que dans l'exemple 1 on teste différents taux de copolymères selon l'invention.

Essai n° 23 :

Cet essai, illustrant l'invention, met en oeuvre 0,4 % en poids sec d'un polymère neutralisé à 100 % par la soude, de viscosité spécifique égale à 0,98 et constitué de;

a) 3,5 % en poids d'acide méthacrylique et 13,5 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 45.

Essai n° 24 :

Cet essai, illustrant l'invention, met en oeuvre 0,6 % en poids sec d'un polymère neutralisé à 100 % par la soude, de viscosité spécifique égale à 1,17 et constitué de :

a) 3,5 % en poids d'acide méthacrylique et 13,5 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 11.

Essai n° 25 :

Cet essai, illustrant l'invention, met en oeuvre 1,0 % en poids sec d'un polymère neutralisé à 100 % par la soude, de viscosité spécifique égale à 0,86 et constitué de :

a) 3,5 % en poids d'acide méthacrylique et 13,5 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 17.

Tous les résultats expérimentaux sont consignés dans le tableau 2 suivant.

**TABLEAU 2**

| | ESSAI N° | MONOMERES CONSTITUANTS | QUANTITE D'AGENT (% sec/sec) | VISCOSITE BROOKFIELD (mPa.s) | | | | | | POTENTIEL ZETA (mV) |
|---|---|---|---|---|---|---|---|---|---|---|
| | | | | INITIALE | | 8j AVANT AGITATION | | 8j APRES AGITATION | | |
| | | | | 10 T/min | 100T/min | 10 T/min | 100T/min | 10 T/min | 100T/min | |
| Invention | 23 | 3,5% AMA<br>13,5% A A<br>83,0% M méthoxy PEG 2000 | 0,4 | 2000 | 480 | 1800 | 660 | 1890 | 540 | -20.8 |
| Invention | 24 | 3,5% AMA<br>13,5% AA<br>83,0% M méthoxy PEG 500 | 0,6 | 2600 | 540 | 3000 | 750 | 2500 | 510 | -24,2 |
| Invention | 25 | 3,5% AMA<br>13,5% A A<br>83,0% M méthoxy PEG 750 | 1,0 | 8000 | 1300 | 9000 | 1600 | 8500 | 1500 | -25,9 |

AA = Acide acrylique.
AMA = Acide méthacrylique.
M méthoxy PEG 750 = Méthacrylate de méthoxy polyéthylène glycol de poids moléculaire 750.
M méthoxy PEG 2000 = Méthacrylate de méthoxy polyéthylène glycol de poids moléculaire 2000.
M méthoxy PEG 500 = Méthacrylate de méthoxy polyéthylène glycol de poids moléculaire 500.

La lecture du tableau 2 permet de mettre en évidence que les suspensions aqueuses de pigments et/ou charges minérales, selon l'invention, moyennement à fortement chargées en matière minérale, stables dans le temps et ayant un potentiel Zéta faible contiennent de 0,05 % à 5 % en poids sec de l'agent selon l'invention par rapport au poids sec total des charges et/ou pigments, et encore plus particulièrement 0,3 % à 1,0 % en poids sec dudit agent par rapport au poids sec total des charges et/ou pigments.

EXEMPLE 3

Cet exemple a pour but d'illustrer les différentes valeurs du produit (m+n+p)q du monomère à insaturation éthylénique non ionique de formule (I) de l'agent dispersant selon l'invention.

Dans ce but avec le même mode opératoire et le même matériel que dans l'exemple 1 on teste différents copolymères selon l'invention.

Essai n° 26 :

Cet essai, illustrant l'invention, met en oeuvre 0,4 % en poids sec d'un polymère neutralisé à 100 % par la soude, de viscosité spécifique égale à 1,19 et constitué de :

a) 3,5 % en poids d'acide méthacrylique et 13,5 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q=17.

Essai n° 27 :

Cet essai, illustrant l'invention, met en oeuvre 0,8 % en poids sec d'un polymère neutralisé à. 100 % par la soude, de viscosité spécifique égale à 0,81 et constitué de :

a) 3,5 % en poids d'acide méthacrylique et 13,5 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R'représente le radical méthyle
avec (m+n+p)q= 25,

Essai n° 28 :

Cet essai, illustrant l'invention, met en oeuvre 0,4 % en poids sec d'un polymère neutralisé à 100 % par la soude, de viscosité spécifique égale à 1,05 et constitué de :

a) 3,5 % en poids d'acide méthacrylique et 13,5 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 45.

<u>Essai n° 29</u> :

Cet essai, illustrant l'invention, met en oeuvre 0,4 % en poids sec d'un polymère neutralisé à 100 % par la soude, de viscosité spécifique égale à 2,57 et constitué de :

a) 3,5 % en poids d'acide méthacrylique et 13,5 % en poids d'acide acrylique comme monomères anioniques à fonction monocarboxylique
b) 83,0 % en poids d'un monomère de formule (I) dans laquelle

$R_1$ représente l'hydrogène
$R_2$représente l'hydrogène
R représente le groupe méthacrylate
R' représente le radical méthyle
avec (m+n+p)q= 113.

Tous les résultats expérimentaux sont consignés dans le tableau 3 suivant.

TABLEAU 3

| | ESSAI N° | MONOMERES CONSTITUANTS | (m+n+p)q | VISCOSITE BROOKFIELD (mPa.s) | | | | | | POTENTIEL ZETA (mV) |
|---|---|---|---|---|---|---|---|---|---|---|
| | | | | INITIALE | | 8j AVANT AGITATION | | 8j APRES AGITATION | | |
| | | | | 10T/min | 100T/min | 10 T/min | 100T/min | 10T/min | 100T/min | |
| Invention | 26 | 3,5% AMA<br>13,5% AA<br>83,0% méthoxy PEG 750 | 17 | 4000 | 820 | 3200 | 980 | 4500 | 930 | -23,9 |
| Invention | 27 | 3,5% AMA<br>13,5% AA<br>83,0% M méthoxy PEG 1100 | 25 | 3200 | 810 | 4000 | 1000 | 3500 | 940 | -22,1 |
| Invention | 28 | 3,5% AMA<br>13,5% A A<br>83,0% M méthoxy PEG 2000 | 45 | 2000 | 470 | 3000 | 850 | 2230 | 590 | -18,6 |
| Invention | 29 | 3,5% AMA<br>13,5% AA<br>83,0% M méthoxy PEG 5000 | 113 | 4600 | 820 | 9000 | 1600 | 5000 | 1200 | -6,7 |

AA = Acide acrylique.
AMA = Acide méthacrylique.
M méthoxy PEG 750 = Méthacrylate de méthoxy polyéthylène glycol de poids moléculaire 750,
M méthoxy PEG 2000 = Méthacrylate de méthoxy polyéthylène glycol de poids moléculaire 2000.
M méthoxy PEG 1100 = Méthacrylate de méthoxy polyéthylène glycol de poids moléculaire 1100.
M méthoxy PEG 5000 = Méthacrylate de méthoxy polyéthylène glycol de poids moléculaire 5000.

La lecture du tableau 3 permet de mettre en évidence que l'utilisation de copolymère selon l'invention contenant comme monomère non ionique au moins un monomère de formule (I) avec 5 ≤ (m+n+p)q ≤ 150 aboutit à l'obtention de suspensions aqueuses de pigments et/ou charges minérales, selon l'invention, moyennement à fortement chargées en matière minérale, stables dans le temps et ayant un potentiel Zéta faible.

EXEMPLE 4

Cet exemple a pour but d'illustrer différents poids moléculaires de l'agent dispersant selon l'invention.

Dans ce but avec le même mode opératoire et le même matériel que dans l'exemple 1 on teste différents copolymères qui ont tous une viscosité spécifique différente pour une même composition pondérale en monomère et une même forme de neutralisation.

Pour les essais n° 30 à 35, ce sont des copolymères neutralisés à 100 % par de la soudé et constitués de

a) 3,2 % en poids d'acide méthacrylique comme monomère anionique à fonction monocarboxylique

b) 13,5 % en poids de phosphate de méthacrylate d'éthylène glycol comme monomère anionique à fonction phosphorique

c) 83,3 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 45

et ayant les viscosités spécifiques suivantes :

Essai n° 30 :

Le polymère mis en oeuvre dans cet essai, à raison de 0,6 % en poids sec par rapport au poids sec de marbre, a une viscosité spécifique égale à 0,97 et illustre l'invention.

Essai n° 31:

Le polymère mis en oeuvre dans cet essai, à raison de 0,6 % en poids sec par rapport au poids sec de marbre, a une viscosité spécifique égale à 1,57 et illustre l'invention.

Essai n° 32 :

Le polymère mis en oeuvre dans cet essai, à raison de 1,0 % en poids sec par rapport au poids sec de marbre, a une viscosité spécifique égale à 1,75 et illustre l'invention,

Essai n° 33 :

Le polymère mis en oeuvre dans cet essai, à raison de 0,8 % en poids sec par rapport au poids sec de marbre, a une viscosité spécifique égale à 3,72 et illustre l'invention.

Essai n° 34 :

Le polymère mis en oeuvre dans cet essai, à raison de 1,0 % en poids sec par rapport au poids sec de marbre, a une viscosité spécifique égale à 3,74 et illustre l'invention.

Essai n° 35 :

Le polymère mis en oeuvre dans cet essai, à raison de 1,0 % en poids sec par rapport au poids sec de marbre, a une viscosité spécifique égale à 5,08 et illustre l'invention.

Pour les essais n° 36 à 39, ce sont des copolymères neutralisés à 100 % par de la soude et constitués de :

a) 8,0 % en poids d'acide acrylique comme monomère anionique à fonction monocarboxylique

b) 5,5 % en poids de phosphate de méthacrylate d'éthylène glycol comme monomère anionique à fonction phosphorique

c) 82,0 % en poids d'un monomère de formule (I) dans laquelle

$R_1$ représente l'hydrogène

$R_2$ représente l'hydrogène

R représente le groupe méthacryluréthanne

R' représente le radical méthyle

d) 4,5 % en poids d'acrylate d'éthyle
avec (m+n+p)q= 113

et ayant les viscosités spécifiques suivantes :

Essai n° 36 :

Le polymère mis en oeuvre dans cet essai, à raison de 0,8 % en poids sec par rapport au poids sec de marbre, a une viscosité spécifique égale à 1,19 et illustre l'invention.

Essai n° 37 :

Le polymère mis en oeuvre dans cet essai, à raison de 0,8 % en poids sec par rapport au poids sec de marbre, a une viscosité spécifique égale à 1,31 et illustre l'invention.

Essai n° 38 :

Le polymère mis en oeuvre dans cet essai, à raison de 0,8 % en poids sec par rapport au poids sec de marbre, a une viscosité spécifique égale à 1,83 et illustre l'invention.

Essai n° 39 :

Le polymère mis en oeuvre dans cet essai, à raison de 0,8 % en poids sec par rapport au poids sec de marbre, a une viscosité spécifique égale à 2,04 et illustre l'invention.

Pour les essais n° 40 et 41, ce sont des copolymères neutralisés à 100 % par de la soude et constitués de :

a) 3,5 % en poids d'acide méthacrylique et 13,5 % en poids d'acide acrylique comme monomères anioniques à fonction monocaxboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle
avec (m+n+p)q= 45.

et ayant les viscosités spécifiques suivantes :

Essai n° 40 :

Le polymère mis en oeuvre dans cet essai, à raison de 0,4 % en poids sec par rapport au poids sec de marbre, a une viscosité spécifique égale à 0,98 et illustre l'invention.

Essai n° 41 :

Le polymère mis en oeuvre dans cet essai, à raison de 0,4 % en poids sec par rapport au poids sec de marbre, a une viscosité spécifique égale à 2,33 et illustre l'invention.

Tous les résultats expérimentaux de viscosité Brookfield™ et de potentiel Zéta mesurés avec le même matériel et dans les mêmes conditions opératoires que dans l'exemple I sont consignés dans les tableaux 4a et 4b suivants.

TABLEAU 4a

| | ESSAI N° | MONOMERES CONSTITUANTS | VISCOSITE SPECIFIQUE | VISCOSITE BROOKFIELD (mPa.s) | | | | | | POTENTIEL ZETA (mV) |
|---|---|---|---|---|---|---|---|---|---|---|
| | | | | INITIALE | | 8j AVANT AGITATION | | 8j APRES AGITATION | | |
| | | | | 10T/min | 100T/min | 10T/min | 100T/min | 10T/min | 100T/min | |
| Invention | 30 | 3,2%AMA 13,5% PO4MAEG 83,3% M méthoxy PEG 2000 | 0,97 | 750 | 330 | 3000 | 500 | 700 | 240 | -12,6 |
| Invention | 31 | 3,2% AMA 13,5% PO4MAEG 83,3% M méthoxy PEG M méthoxy PEG 2000 | 1,57 | 7400 | 920 | 13000 | 1300 | 8400 | 1120 | -15,7 |
| Invention | 32 | 3,2% AMA 13,5% PO4MAEG 83.3% M méthoxy PEG 2000 | 1,75 | 19000 | 2900 | 22000 | 3200 | 20000 | 3000 | -16,8 |
| Invention | 33 | 3,2% AMA 13,5% PO4MAEG 83,3% M méthoxy PEG 2000 | 3,72 | 20000 | 2800 | 25000 | 3000 | 22000 | 2900 | -16 |
| Invention | 34 | 3,2% AMA 13,5% PO4MAEG 83,3% M méthoxy PEG 2000 | 3,74 | 9000 | 1450 | 13000 | 1950 | 10000 | 1550 | -15,7 |

(suite)

| | ESSAI N° | MONOMERES CONSTITUANTS | VISCOSITE SPECIFIQUE | VISCOSITE BROOKFIELD (mPa.s) | | | | | | POTENTIEL ZETA (mV) |
|---|---|---|---|---|---|---|---|---|---|---|
| | | | | INITIALE | | 8j AVANT AGITATION | | 8j APRES AGITATION | | |
| | | | | 10T/min | 100T/min | 10T/min | 100T/min | 10T/min | 100T/min | |
| Invention | 35 | 3,2%AMA<br>13,5% PO4MAEG<br>83,3% M méthoxy PEG 2000 | 5,08 | 13000 | 2600 | 15000 | 2750 | 1400 | 2700 | -18.6 |

AA = Acide acrylique.
AMA = Acide méthacrylique.
M méthoxy PEG 2000 = Méthacrylate de méthoxy polyéthylène glycol de poids moléculaire 2000.
PO4MAEG = Phosphate de méthacrylate d'éthylène glycol.
AE = Acrylate d'éthyle.

TABLEAU 4b

| | ESSAI N° | MONOMERES CONSTITUANTS | VISCOSITE SPECIFIQUE | VISCOSITE BROOKFIELD (mPa.s) | | | | | | POTENTIEL ZETA (mV) |
|---|---|---|---|---|---|---|---|---|---|---|
| | | | | INITIALE | | 8 j AVANT AGITATION | | 8 j APRES AGITATION | | |
| | | | | 10 T/min | 100T/min | 10 T/min | 100T/min | 10 T/min | 100T/min | |
| Invention | 36 | 8.0%AA<br>5,5% PO4MAEG<br>82.0% MU méthoxy PEG 5000<br>4.5% AE | 1,19 | 2200 | 780 | 5000 | 1700 | 3200 | 1140 | -6,2 |
| Invention | 37 | 8.0% A A<br>5,5% PO4MAEG<br>82.0% MU méthoxy PEG 5000<br>4.5% AE | 1,31 | 950 | 430 | 4500 | 700 | 700 | 390 | -5,7 |
| Invention | 38 | 8.0%A A<br>5,5 PO4MAEG<br>82,0% MU méthoxy PEG 5000<br>4,5% AE | 1,83 | 6400 | 970 | 7000 | 1100 | 1900 | 600 | -8,6 |
| Invention | 39 | 8,0% A A<br>5,5% PO4MAEG<br>82,0% MU méthoxy PEG 5000<br>4,5% AE | 2,04 | 6800 | 1280 | 9000 | 1350 | 2200 | 920 | -5.6 |
| Invention | 40 | 3,5% AMA<br>13,5% A A<br>83,0% M méthoxy PEG 2000 | 0,98 | 2000 | 480 | 1800 | 660 | 1890 | 540 | -20,8 |

(suite)

| | ESSAI N° | MONOMERES CONSTITUANTS | VISCOSITE SPECIFIQUE | VISCOSITE BROOKFIELD (mPa.s) | | | | | | POTENTIEL ZETA (mV) |
|---|---|---|---|---|---|---|---|---|---|---|
| | | | | INITIALE | | 8 j AVANT AGITATION | | 8 j APRES AGITATION | | |
| | | | | 10 T/min | 100T/min | 10 T/min | 100T/min | 10 T/min | 100T/min | |
| Invention | 41 | 3,5% AMA<br>13,5% A A<br>83,0% M méthoxy PEG 2000 | 2,33 | 6400 | 920 | 5000 | 1010 | 6900 | 1400 | -15,2 |

AA = Acide acrylique.
AMA = Acide méthacrylique.
M méthoxy PEG 2000 = Méthacrylate de méthoxy polyéthylène glycol de poids moléculaire 2000.
PO4MAEG = Phosphate de méthacrylate d'éthylène glycol.
MU méthoxy PEG 5000 = Méthacryluréthanne de méthoxy polyéthylène glycol de poids moléculaire 5000.
AE = Acrylate d'éthyle.

La lecture des tableaux 4a et 4b permet de mettre en évidence que l'utilisation de copolymère selon l'invention ayant une viscosité spécifique au plus égale à 10, préférentiellement au plus égale à 5 et très préférentiellement au plus égale à 2, aboutit à l'obtention de suspensions aqueuses de pigments et/ou charges minérales, selon l'invention, fortement chargées en matière minérale, stables dans le temps et ayant un potentiel Zéta faible.

EXEMPLE 5

Cet exemple a pour but d'illustrer différents types et taux de neutralisation de l'agent dispersant selon l'invention.
Dans ce but avec le même mode opératoire et le même matériel que dans l'exemple 1 on teste, à raison de 0,4 % en poids sec par rapport au poids sec de marbre, les différents copolymères suivants, qui ont des neutralisations différentes pour une même composition pondérale en monomère et une même viscosité spécifique.
Ce sont tous des copolymères de viscosité spécifique égale à 1,05 et constitués de :

a) 3,5 % en poids d'acide méthacrylique et 13,5 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45.

Les différents types et taux de neutralisation sont les suivants :

Essai n° 42 :

Le polymère mis en oeuvre dans cet essai est neutralisé à 100 % par de la potasse et illustre l'invention.

Essai n° 43 :

Le polymère mis en oeuvre dans cet essai est neutralisé à 100 % par de l'ammoniaque et illustre l'invention.

Essai n° 44 :

Le polymère mis en oeuvre dans cet essai est totalement acide et illustre l'invention.

Essai n° 45 :

Le polymère mis en oeuvre dans cet essai est neutralisé à 100 % par de la triéthanolamine (TEA) et illustre l'invention.

Essai n° 46 :

Le polymère mis en oeuvre dans cet essai est neutralisé à 100 % par de l'hydroxyde de lithium et illustre l'invention.

Essai n° 47 :

Le polymère mis en oeuvre dans cet essai est neutralise à 50 % en moles par de l'hydroxyde de magnésium et illustre l'invention.

Essai n° 48 :

Le polymère mis en oeuvre dans cet essai est neutralisé à 100 % par un mélange composé de 70 % en moles de soude et 30 % en moles de chaux et illustre l'invention.

Essai n° 49 :

Le polymère mis en oeuvre dans cet essai est neutralisé à 100 % par un mélange composé de 50 % en moles de soude et 50 % en moles d'hydroxyde de magnésium et illustre l'invention.

Tous les résultats expérimentaux de viscosité Brookfield™ et de potentiel Zéta mesurés avec le même matériel et dans les mêmes conditions opératoires que dans l'exemple I sont consignés dans les tableaux 5a et 5b suivants.

TABLEAU 5a

| | ESSAI N° | MONOMERES CONSTITUANTS | NEUTRALISATION | VISCOSITE BROOKFIELD (mPa.s) | | | | | | POTENTIEL ZETA (mV) |
|---|---|---|---|---|---|---|---|---|---|---|
| | | | | INITIALE | | 8j AVANT AGITATION | | 8j APRES AGITATION | | |
| | | | | 10 T/min | 100T/min | 10 T/min | 100T/min | 10T/min | 100T/min | |
| Invention | 42 | 3,5% AMA<br>13,5% AA<br>83,0% M méthoxy PEG 2000 | 100 K | 1100 | 255 | 3000 | 700 | 1200 | 290 | -19,5 |
| Invention | 43 | 3,5% AMA<br>13,5% AA<br>83,0% M méthoxy PEG 2000 | 100 $NH_4OH$ | 6000 | 840 | 6000 | 1100 | 4500 | 790 | -14,7 |
| Invention | 44 | 3,5% AMA<br>13,5% AA<br>83,0% M méthoxy PEG 2000 | 0 | 2200 | 490 | 5000 | 1000 | 2500 | 290 | -10,1 |
| Invention | 45 | 3,5% AMA<br>13,5% AA<br>83,0% M méthoxy PEG 2000 | 100 TEA | 4500 | 700 | 4000 | 900 | 2900 | 550 | -14,8 |
| Invention | 46 | 3,5% AMA<br>13,5% AA<br>83,0% M méthoxy PEG 2000 | 100 Li | 4100 | 670 | 8000 | 1050 | 7000 | 950 | -20,3 |
| Invention | 47 | 3,5% AMA<br>13,5% AA<br>83,0% M méthoxy PEG 2000 | 50 Mg | 1500 | 360 | 3500 | 650 | 1700 | 325 | -8,8 |

AA = Acide acrylique.
AMA = Acide méthacrylique.
M méthoxy PEG 2000 = Méthacrylate de méthoxy polyéthylène glycol de poids moléculaire 2000.

TABLEAU 5b

| | ESSAI N° | MONOMERES CONSTITUANTS | NEUTRALISATION | VISCOSITE BROOKFIELD (mPa.s) | | | | | | POTENTIEL ZETA (mV) |
|---|---|---|---|---|---|---|---|---|---|---|
| | | | | INITIALE | | 8j AVANT AGITATION | | 8j APRES AGITATION | | |
| | | | | 10 T/min | 100 T/min | 10 T/min | 100 T/min | 10T/min | 100T/min | |
| Invention | 48 | 3,5% AMA<br>13,5% AA<br>83,0% M méthoxy PEG 2000 | 70Na-30Ca | 4000 | 620 | 5000 | 1000 | 4000 | 720 | -18,9 |
| Invention | 49 | 3,5% AMA<br>13,5% AA<br>83,0% M méthoxy PEG 2000 | 50Na-50Mg | 4600 | 800 | 7000 | 1100 | 5200 | 850 | -15,5 |

AA = Acide acrylique.
AMA = Acide méthacrylique.
M méthoxy PEG 2000 = Méthacrylate de méthoxy polyéthylène glycol de poids moléculaire 2000.

La lecture des tableaux 5a et 5b permet de mettre en évidence que l'utilisation de copolymère selon l'invention, totalement acide ou partiellement ou totalement neutralisé par un ou plusieurs agents de neutralisation disposant d'une fonction neutralisante monovalente ou d'une fonction neutralisante polyvalente aboutit à l'obtention de suspensions aqueuses de pigments et/ou charges minérales, selon l'invention, fortement chargées en matière minérale, stables dans le temps et ayant un potentiel Zéta faible.

EXEMPLE 6

Cet exemple concerne le broyage d'une suspension de carbonate de calcium naturel pour l'affiner en une suspension micro-particulaire.

Dans ce but, pour chaque essai on introduit 0,75 % en poids sec, par rapport au poids sec total du carbonate de calcium, d'agent d'aide au broyage à tester dans une suspension aqueuse à 42 % en matière sèche d'un marbre provenant du gisement de Carrare et de diamètre moyen de l'ordre de 10 $\mu$m.

La suspension circule dans un broyeur du type Dyno-Mill à cylindre fixe et impulseur tournant, dont le corps broyant est constitué par des billes de corindon de diamètre compris dans l'intervalle 0,6 millimètre à 1 millimétré.

Le volume total occupé par le corps broyant est de 1150 centimètres cubes tandis que sa masse est de 2900 g.

La chambre de broyage a un volume de 1400 centimètres cubes.

La vitesse circonférentielle du broyeur est de 10 mètres par seconde.

La suspension de carbonate de calcium est recyclée à raison de 18 litres par heure.

La sortie du Dyno-Mill est munie d'un séparateur de mailles 200 microns permettant de séparer la suspension résultant du broyage et le corps broyant.

La température lors de chaque essai de broyage est maintenue à environ 60°C.

A la fin du broyage ($T_0$), on récupère dans un flacon un échantillon de la suspension pigmentaire. La granulométrie de cette suspension (% des particules inférieures à 1 micromètre) est mesurée à l'aide d'un granulomètre Sédigraph™ 5100 de la société Micromerities.

La viscosité Brookfield™ de la suspension est mesurée à l'aide d'un viscosimètre Brookfield ™ type RVT, à une température de 20°C et des vitesses de rotation de 10 tours par minute et 100 tours par minute avec le mobile adéquat.

Après un temps de repos de 8 jours dans le flacon, la viscosité Brookfield™ de la suspension est mesurée par introduction, dans le flacon non agité, du mobile adéquat du viscosimètre Brookfield™ type RVT, à une température de 20°C et des vitesses de rotation de 10 tours par minute et 100 tours par minute (viscosité AVAG = avant agitation).

Les mêmes mesures de viscosité Brookfield™ sont également effectuées une fois le flacon agité et constituent les résultats de viscosité APAG (après agitation).

Ainsi, dans les différents essais sont testés les différents agents d'aide au broyage suivants.

Essai n° 50 :

Cet essai, illustrant l'invention , met en oeuvre un polymère neutralisé à 100 % par la soude, de viscosité spécifique égale à 0,98 et constitué de :

a) 3,4 % en poids d'acide méthacrylique et 13,6 % en poids d'acide acrylique comme monomères anioniques à fonction monocarboxylique

b) 83,0 % en poids d'un monomère de formule (I) dans laquelle

$R_1$ représente l'hydrogène

$R_2$représente l'hydrogène

R représente le groupe méthacrylate

R' représente le radical méthyle

avec (m+n+p)q= 45,

Essai n° 51:

Cet essai, illustrant l'invention, met en oeuvre un polymère neutralisé à 100 % par la potasse, de viscosité spécifique égale à 0,98 et constitué de :

a) 3,4 % en poids d'acide méthacrylique et 13,6 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45.

Essai n° 52 :

Cet essai, illustrant l'invention, met en oeuvre un polymère, de viscosité spécifique égale à 0,98, neutralisé à 100 % de manière à ce que 50 % des groupes acides soient neutralisés à la soude et 50 % des groupes acides soient neutralisés à l'hydoxyde de magnésium, et constitué de :

a) 3,4 % en poids d'acide méthacrylique et 13,6 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45.

Essai n° 53 :

Cet essai, illustrant l'invention, met en oeuvre un polymère non neutralisé, de viscosité spécifique égale à 0,98 et constitué de :

a) 3,4 % en poids d'acide méthacrylique et 13,6 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45.

Tous les résultats expérimentaux de viscosité Brookfield™ et de potentiel Zéta mesurés avec le même matériel et dans les mêmes conditions opératoires que dans l'exemple 1 sont consignés dans le tableau 6 suivant.

TABLEAU 6

| | ESSAI N° | MONOMERES CONSTITUANTS | NEUTRALISATION TAUX/ION | GRANULOMETRIE (% < 1 μm) | VISCOSITE BROOKFIELD (mPa.s) | | | | | | POTENTIEL ZETA (mV) |
|---|---|---|---|---|---|---|---|---|---|---|---|
| | | | | | INITIALE | | 8j AVANT AGITATION | | 8j APRES AGITATION | | |
| | | | | | 10 T/min | 100 T/min | 10 T/min | 100 T/min | 10 T/min | 100 T/min | |
| Invention | 50 | 3,4 % AMA<br>13,6% AA<br>83,0 % M méthoxyPEG 2000 | 100 Na | 70,4 | 2400 | 370 | 1700 | 455 | 750 | 170 | -15.7 |
| Invention | 51 | 3,4 % AMA<br>13,6 % AA<br>83,0 % M méthoxy PEG 2000 | 100 K | 73,9 | 2550 | 430 | 1500 | 535 | 950 | 230 | -13,4 |
| Invention | 52 | 3,4 % AMA<br>13,6% AA<br>83,0% M méthoxy PEG 2000 | 50 Na-50 Mg | 72,3 | 1300 | 300 | 660 | 120 | 650 | 112 | -11,9 |
| Invention | 53 | 3.4% AMA<br>3,4 % AMA 13,6% AA<br>83.0% M méthoxy PEG 2000 | 0 | 70,7 | 2850 | 460 | 1350 | 315 | 500 | 93 | -8.7 |

AMA =Acide méthacrylique.
AA = Acide acrylique.
M méthoxy PEG 2000 = Méthacrylate de méthoxy polyéthylène glycol de poids moléculaire 2000.

La lecture du tableau 6 permet de mettre en évidence que l'utilisation de copolymère selon l'invention, totalement acide ou partiellement ou totalement neutralisé par un ou plusieurs agents de neutralisation disposant d'une fonction neutralisante monovalente ou d'une fonction neutralisante polyvalente aboutit à l'obtention de suspensions aqueuses de pigments et/ou charges minérales broyées, selon l'invention, moyennement à fortement chargées en matière minérale, stables dans le temps et ayant un potentiel Zéta faible.

EXEMPLE 7

Cet exemple concerne le broyage d'une suspension de dolomie pour l'affiner en une suspension micro-particulaire.

Dans ce but, pour chaque essai on introduit 0,50 % en poids sec, par rapport au poids sec total de dolomie, d'agent d'aide au broyage à tester dans une suspension aqueuse à 65 % en matière sèche d'une dolomie de refus à 100 μm égal à 4,2 % et dont le diamètre médian mesuré à l'aide d'un granulomètre CILAS du type 850 est de 15,03 micromètres.

La suspension circule dans un broyeur du type Dyno-Mill à cylindre fixe et impulseur tournant, dont le corps broyant est constitué par des billes de corindon de diamètre compris dans l'intervalle 0,6 millimètre à 1 millimètre,

Le volume total occupé par le corps broyant est de 1150 centimètres cubes tandis que sa masse est de 2900 g.

La chambre de broyage a un volume de 1400 centimètres cubes,

La vitesse circonférentielle du broyeur est de 10 mètres par seconde.
La suspension de dolomie est recyclée à raison de 18 litres par heure.
La sortie du Dyno-Mill est munie d'un séparateur de mailles 200 microns permettant de séparer la suspension résultant du broyage et le corps broyant.
La température lors de chaque essai de broyage est maintenue à environ 60°C.

A la fin du broyage (To), on récupère dans un flacon un échantillon de la suspension pigmentaire. La granulométrie de cette suspension (% des particules inférieures à 2 micromètres) est mesurée à l'aide d'un granulomètre CILAS du type 850.

La viscosité Brookfield™ de la suspension est mesurée à l'aide d'un viscosimètre Brookfield™ type RVT, à une température de 20°C et des vitesses de rotation de 10 tours par minute et 100 tours par minute avec le mobile adéquat.

Après un temps de repos de 8 jours dans le flacon, la viscosité Brookfield™ de la suspension est mesurée par introduction, dans le flacon non agité, du mobile adéquat du viscosimètre Brookfield™ type RVT, à une température de 20°C et des vitesses de rotation de 10 tours par minute et 100 tours par minute (viscosité AVAG = avant agitation).

Les mêmes mesures de viscosité Brookfield™ sont également effectuées une fois le flacon agité et constituent les résultats de viscosité APAG (après agitation).

Ainsi, dans les différents essais sont testés les différents agents d'aide au broyage suivants.

Essai n° 54 :

Cet essai, illustrant l'invention, met en oeuvre un polymère non neutralisé, de viscosité spécifique égale à 0,98 et constitué de ;

a) 3,4 % en poids d'acide méthacrylique et 13,6 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45.

Essai n° 55 :

Cet essai, illustrant l'invention, met en oeuvre un polymère neutralisé à 100 % par la soude, de viscosité

spécifique égale à 0,98 et constitué de :

a) 3,4 % en poids d'acide méthacrylique et 13,6 % en poids d'acide acrylique comme, monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45.

Essai n° 56:

Cet essai, illustrant l'invention, met en oeuvre un polymère, de viscosité spécifique égale à 0,98, neutralisé à 100 % par la potasse, et constitué de :

a) 3,4 % en poids d'acide méthacrylique et 13,6 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45.

Tous les résultats expérimentaux de viscosité Brookfield™ et de potentiel Zéta mesurés avec le même matériel et dans les mêmes conditions opératoires que dans l'exemple 1 sont consignés dans le tableau 7 suivant.

TABLEAU 7

| | ESSAI N° | MONOMERES CONSTITUANTS | NEUTRALISATION TAUX/ION | GRANULOMETHIE (% < 2μm) | VISCOSITE BROOKFIELD (mPa.s) | | | | | | POTENTIEL. ZETA (mV) |
|---|---|---|---|---|---|---|---|---|---|---|---|
| | | | | | INITIALE | | 8j AVANT AGITATION | | 8J APRES AGITATION | | |
| | | | | | 10T/min | 100 T/min | 10 T/min | 100 T/min | 10 T/min | 100 T/min | |
| Invention | 54 | 3,4 % AMA<br>13,6 % AA<br>83,0 % M méthoxyPEG 2000 | 0 | 50,4 | 1070 | 183 | 1940 | 274 | 1330 | 205 | -5,7 |
| Invention | 55 | 3,4 % AMA<br>13,6% AA<br>83,0 % M méthoxy PEG 2000 | 100 Na | 56,6 | 2070 | 266 | 2300 | 305 | 1910 | 261 | -7,0 |
| Invention | 56 | 3,4 % AMA<br>13,6 % AA<br>83,0 % M méthoxy PEG 2000 | 100 K | 52,1 | 2570 | 341 | 3470 | 436 | 3460 | 439 | -8,2 |

AMA = Acide méthacrylique.
AA = Acide acrylique.
M méthoxy PEG 2000 = Méthacrylate de méthoxy polyéthylène glycol de poids moléculaire 2000.

La lecture du tableau 7 permet de mettre en évidence que l'utilisation de copolymère selon l'invention, aboutit à l'obtention de suspensions aqueuses de dolomies broyées, selon l'invention, moyennement à fortement chargées en matière minérale, stables dans le temps et ayant un potentiel Zéta faible.

EXEMPLE 8

Cet exemple concerne le broyage d'une suspension de carbonate de calcium naturel pour l'affiner en une suspension micro-particulaire dans un broyeur industriel à micro-éléments, suivi d'une reconcentration et d'une dispersion de la suspension concentrée à l'aide de l'agent dispersant selon l'invention.

Dans ce but, pour chaque essai selon l'invention (Essais n° 57 et 58) après un broyage d'une suspension aqueuse à 41 % en matière sèche d'un marbre norvégien, mettant en oeuvre 0,6 % en poids sec, par rapport au poids sec total du carbonate de calcium, d'un agent d'aide au broyage selon l'invention, polymère neutralisé à 50 % en moles par la potasse, de viscosité spécifique égale à 0,98 et constitué de :

a) 3,4 % en poids d'acide méthacrylique et 13,6 % en poids d'acide acrylique comme monomères à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45,
on procède à une reconcentration thermique de la suspension affinée obtenue jusqu'à l'obtention d'un slurry de concentration en carbonate de calcium sec égale à 72 %.
Pour l'essai n° 57 illustrant l'invention, on introduit dans le concentrateur thermique, lors de l'étape de reconcentration, 0,75 % en poids sec, par rapport au poids sec de carbonate de calcium, du copolymère neutralisé à 100 % par de la soude, de viscosité spécifique égale à. 0,98 et constitué de :

a) 3,4 % en poids d'acide méthacrylique et 13,6 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45.

Pour l'essai n° 58 illustrant l'invention, on introduit dans le concentrateur thermique, lors de l'étape de reconcentration, 0,75 % en poids sec, par rapport au poids sec de carbonate de calcium, du copolymère de viscosité spécifique égale à 0,98, neutralisé à 100 % par de la potasse et constitué de :

a) 3,4 % en poids d'acide méthacrylique et 13,6 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45.

Tous les résultats expérimentaux de viscosité Brookfield™, de potentiel Zéta et de granulométrie mesurés avec le même matériel et dans les mêmes conditions opératoires que dans l'exemple 1 sont consignés dans le tableau 8 suivant.

TABLEAU 8

| | ESSAI | DISPERSANT UTILISE EN RECONCENTRATION | | GRANULOMETRIE (%<1µm) | VISCOSITE BROORFIELD (mPa.s) | | | | | | POTENTIEL ZETA (mV) |
|---|---|---|---|---|---|---|---|---|---|---|---|
| | | MONOMERES CONSTITUANTS | NEUTRALISATION TAUX/ION | | INITIALE | | 8j AVANT AGITATION | | 8j APRES AGITATION | | |
| | | | | | 10T/min | 100 T/min | 10 T/min | 100 T/min | 10 T/min | 100 T/min | |
| Invention | 57 | 3.4%AMA<br>13.6% AA<br>83.0% M méthoxy PEG 2000 | 100 Na | 76,6 | 2520 | 942 | 1100 | 900 | 1650 | 565 | -7,2 |
| Invention | 58 | 3,4% AMA<br>13,6% AA<br>83,0% M méthoxy PEG 2000 | 100 K | 75,7 | 1750 | 583 | 1200 | 690 | 1320 | 407 | -7,8 |

AMA = Acide méthacrylique.
AA = Acide acrylique.
M méthoxy PEG 2000 = Méthacrylate de méthoxy polyéthylène glycol de poids moléculaire 2000.

La lecture du tableau 8 permet de mettre en évidence que l'utilisation de copolymère selon l'invention, aboutit à l'obtention de suspensions aqueuses de pigments et/ou charges minérales broyées puis reconcentrées, selon l'invention, moyennement à fortement chargées en matière minérale, stables dans le temps et ayant un potentiel Zéta faible.

EXEMPLE 9

Cet exemple concerne la préparation d'une suspension de différentes charges minérales par simple délitage et la mise en évidence des propriétés apportées par la présence dans le monomère non ionique d'au moins un monomère de formule (I).

Dans ce but, on prépare la suspension aqueuse de charge minérale à tester par introduction tout d'abord de l'agent à tester dans l'eau puis de la matière minérale à disperser.

Essai n° 59 :

Cet essai illustre l'invention et met en oeuvre comme matière minérale du kaolin (kaolin SPS de ECC) à une concentration en matière sèche de 60,5 % et comme agent dispersant 1,0 % en poids sec, par rapport au poids sec de kaolin, d'un copolymère de viscosité spécifique égale à 0,98, neutralisé à 100 % par de la potasse et constitué de :

a) 3,4 % en poids d'acide méthacrylique et 13,6 % en poids d'acide acrylique comme monomères anioniques à fonction monocarboxylique

b) 83,0 % en poids d'un monomère de formule (I) dans laquelle

$R_1$ représente l'hydrogène

$R_2$ représente l'hydrogène

R représente le groupe méthacrylate

R' représente le radical méthyle

avec (m+n+p)q= 45.

Essai n° 60 :

Cet essai illustre l'invention et met en oeuvre comme matière minérale du dioxyde de titane commercialisé par la société Tioxide sous le nom R-HD2 à une concentration en matière sèche de 60,4 % et comme agent dispersant 0,4 % en poids sec, par rapport au poids sec de dioxyde de titane, du même copolymère que celui mis en oeuvre dans l'essai n° 59.

Essai n° 61 :

Cet essai illustre l'invention et met en oeuvre comme matière minérale de la chaux fournie par la société Aldrich à une concentration en matière sèche de 60,6 % et comme agent dispersant 1,0 % en poids sec, par rapport au poids sec de chaux, du même copolymère que celui mis en oeuvre dans l'essai n° 59.

Essai n° 62 :

Cet essai illustre l'invention et met en oeuvre comme matière minérale de l'hydroxyde de magnésium fournie par la société Aldrich à une concentration en matière sèche de 60,5 % et comme agent dispersant 0,4 % en poids sec, par rapport au poids sec d'hydroxyde de magnésium, du même copolymère que celui mis en oeuvre dans l'essai n° 59.

Essai n° 63 :

Cet essai illustre l'invention et met en oeuvre comme matière minérale une craie commercialisée par la société Omya sous le nom d'Etiquette Violette à une concentration en matière sèche de 70 % et comme agent dispersant 0,3 % en poids sec, par rapport au poids sec de craie, du même copolymère que celui mis en oeuvre dans l'essai n° 59.

Tous les résultats expérimentaux de viscosité Brookfield™ et de potentiel Zéta mesurés avec le même matériel

et dans les mêmes conditions opératoires que dans l'exemple 1 sont consignés dans le tableau 9 suivant.

TABLEAU 9

| | ESSAI N° | CHARGE MINERALE | %EN MATIERE SECHE | VISCOSITE BROOKFELD (mPas) | | | | | | POTENTIEL ZETA (mV) |
|---|---|---|---|---|---|---|---|---|---|---|
| | | | | INITIALE | | 8j AVANT AGITATION | | 8j APRES AGITATION | | |
| | | | | 10 T/min | 100T/min | 10T/min | 100 T/min, | 10 T/min | 100 T/min | |
| Invention | 59 | Kaolin | 60,5 | 3830 | 760 | 8000 | 1400 | 5200 | 950 | -10,6 |
| Invention | 60 | Dioxyde de titane | 60,4 | 2600 | 480 | 3000 | 550 | 1100 | 170 | -17,2 |
| Invention | 61 | Chaux | 60,6 | 800 | 530 | 20000 | 4800 | 10000 | 4400 | -7,6 |
| Invention | 62 | Hydroxyde de magnésium | 60,5 | 400 | 180 | 3000 | 3800 | 200 | 130 | -3,6 |
| Invention | 63 | Craie | 70 | 790 | 146 | 3880 | 891 | 1740 | 277 | -28 |

La lecture du tableau 9 permet de mettre en évidence que l'utilisation de copolymère selon l'invention contenant comme monomère non ionique au moins un monomère de formule (I) aboutit à l'obtention de suspensions aqueuses de pigments et/ou charges minérales, selon l'invention, moyennement à fortement chargées en matière minérale, stables dans le temps et ayant un potentiel Zéta faible, quelle que soit la matière minérale mise en oeuvre,

EXEMPLE 10

Cet exemple a pour but d'illustrer la faible sensibilité aux pH alcalins des suspensions aqueuses selon l'invention.
Pour ce faire on introduit dans de l'eau une quantité de polymère à tester correspondante à 0,73 % en poids sec par rapport au poids sec de matière minérale.
Après homogénéisation du polymère dans l'eau par agitation, le pH du milieu est ajusté à 9 par ajout de soude.
Le pH étant constant, il est alors introduit la quantité nécessaire de matière minérale pour obtenir une concentration en matière sèche égale à 70 %.
Après 30 minutes d'agitation, on rajoute de l'ammoniac jusqu'à obtenir un pH égal à 10.
L'échantillon est alors divisé en trois parties.
La première partie est réservée à l'étude de la viscosité Brookfield™ effectuée avec le même mode opératoire et le même matériel que dans les exemples précédents.
La deuxième partie de l'échantillon est agitée pendant 30 minutes, Après ces 30 minutes d'agitation, le pH est descendu à 7,5 au moyen d'acide acétique.
Au bout de 20 minutes supplémentaire d'agitation, on procède à une mesure de conductivité de la suspension aqueuse de matière minérale à l'aide d'un conductivimètre de type LF 320 commercialisé par la Société Wissenschaftliche Technische Werkstätten. Cette valeur correspond alors à la conductivité de la suspension à pH égal à 7,5. L'échantillon est alors soumis à l'étude de viscosité Brookfield™ telle que précédemment décrite.
La troisième partie de l'échantillon est agitée pendant 30 minutes. Après ces 30 minutes d'agitation, le pH est monté à 13 par l'ajout de soude.
Au bout de 20 minutes supplémentaire d'agitation, on procède à une mesure de conductivité de la suspension aqueuse de matière minérale à l'aide du même conductivimètre que celui utilisé précédemment. Cette valeur correspond alors à la conductivité de la suspension à pH égal à 13. L'échantillon est alors soumis à l'étude de viscosité Brookfield™ telle que précédemment décrite.

Essai n° 64:

Cet essai illustre l'art antérieur et met en oeuvre comme matière minérale un carbonate de calcium précipité commercialisé par Solvay sous le nom de Socal™ P3 et comme agent dispersant un acide polyacrylique de viscosité spécifique égale à 0,84.

Essai n° 65 :

Cet essai illustre l'invention et met en oeuvre comme matière minérale un carbonate de calcium précipité commercialisé par Solvay sous le nom de Socal™ P3 et comme agent dispersant le même copolymère que celui mis en oeuvre dans l'essai n° 59,
**[0175]** Tous les résultats expérimentaux de viscosité Brookfield™ et de conductivité sont consignés dans le tableau 10 suivant.

TABLEAU 10

| | ESSAI N° | pH | CONDUCTIVITE mS/cm | VISCOSITE BROOKFIELD (mPa.s) | | | | | |
|---|---|---|---|---|---|---|---|---|---|
| | | | | INITIALE | | 8 j AVANT AGITATION | | 8 j APRES AGITATION | |
| | | | | 10 T/min | 100 T/min | 10 T/min | 100 T/min | 10 T/min | 100 T/min |
| Art antérieur | 64 | 7,5 | 2,27 | 10000 | 2764 | Viscosité | trop élevée | non | mesurable |
| | | 10 | 2,7 | 3460 | 926 | 3480 | 994 | 3390 | 858 |
| | | 13 | 11,2 | 50800 | 7440 | Viscosité | trop élevée | non | mesurable |

(suite)

| | ESSAI N° | pH | CONDUCTIVITE mS/cm | VISCOSITE BROOKFIELD (mPa.s) | | | | | |
|---|---|---|---|---|---|---|---|---|---|
| | | | | INITIALE | | 8 j AVANT AGITATION | | 8 j APRES AGITATION | |
| | | | | 10 T/min | 100 T/min | 10 T/min | 100 T/min | 10 T/min | 100 T/min |
| Invention | 65 | 7,5<br>10<br>13 | 1,4<br>1,7<br>4,8 | 320<br>400<br>8920 | 252<br>362<br>2500 | 1020<br>820<br>10500 | 442<br>531<br>4230 | 430<br>450<br>8600 | 300<br>366<br>3204 |

La lecture du tableau 10 permet de mettre en évidence que l'utilisation de copolymère selon l'invention contenant comme monomère non ionique au moins un monomère de formule (I) aboutit à l'obtention de suspensions aqueuses de pigments et/ou charges minérales, selon l'invention, moyennement à fortement chargées en matière minérale, stables dans le temps et ayant une faible sensibilité aux pH alcalins.

EXEMPLE 11

Cet exemple a pour but d'illustrer la faible sensibilité au pH acide ou faiblement alcalin des suspensions aqueuses selon l'invention.
Pour ce faire on introduit dans de l'eau une quantité de polymère à tester correspondante à 0,45 % en poids sec par rapport au poids sec de matière minérale.
Après homogénéisation du polymère dans l'eau par agitation, il est introduit la quantité nécessaire de matière minérale pour obtenir une concentration en matière sèche égale à 60 %.
Après 30 minutes d'agitation, l'échantillon est alors divisé en trois parties pour des mesures de viscosité Brookfield™ et de conductivité sur chacune des parties de l'échantillon avec le même mode opératoire et le même matériel que celui utilisé dans l'exemple précédent,
**[0181]** La première partie correspond à un pH naturel de dispersion égal à 8 et est réservée à l'étude de viscosité Brookfield™ telle que décrite dans l'exemple 10.
Pour la deuxième partie de l'échantillon, le pH est descendu à 6 au moyen d'acide chlorhydrique.
Au bout de 20 minutes supplémentaire d'agitation, on procède à une mesure de conductivité de la suspension aqueuse de matière minérale. Cette valeur correspond alors à la conductivité de la suspension à pH égal à 6,0. L'échantillon est alors soumis à l'étude de viscosité Brookfield™ telle que précédemment décrite.
Pour la troisième partie de l'échantillon, le pH est descendu à 3 par l'ajout supplémentaire d'acide chlorhydrique.
Au bout de 20 minutes supplémentaire d'agitation, on procède à une mesure de conductivité de la suspension aqueuse de matière minérale à l'aide du même conductivimètre que celui utilisé précédemment. Cette valeur correspond alors à la conductivité de la suspension à pH égal à 3. L'échantillon est alors soumis à l'étude de viscosité Brookfield™ telle que précédemment décrite.

Essai n° 66 :

Cet essai illustre l'art antérieur et met en oeuvre comme matière minérale un dioxyde de titane commercialisé par la société Tioxide sous le nom R-HD2 et comme agent dispersant un copolymère commercialisé par la société Coatex sous le nom Coatex BR3 et de viscosité spécifique de 1,3.
Dans cet essai, il a été impossible de poursuivre la dispersion lorsque le pH a été descendu à 3 car il y a eu prise en masse de l'oxyde de titane et blocage du disperseur.
Les mesures de viscosité Brookfield™ et de conductivité n'ont donc pas pu être effectuées à cette valeur de pH.

Essai n° 67 :

Cet essai illustre l'invention et met en oeuvre comme matière minérale un dioxyde de titane commercialisé par la société Tioxide sous le nom R-HD2 et comme agent dispersant le même copolymère que celui mis en oeuvre dans l'essai n° 59.
Tous les résultats expérimentaux de viscosité Brookfield™ et de conductivité sont consignés dans le tableau 11 suivant.

TABLEAU 11

| | ESSAI N° | pH | EXTRAIT SEC FINAL (%) | CONDUCTIVITE mS/cm | VISCOSITE BROOKFIELD (mPas) | | | | | |
|---|---|---|---|---|---|---|---|---|---|---|
| | | | | | INITIALE | | 8j AVANT AGITATION | | 8j APRES AGITATION | |
| | | | | | 10 T/min | 100 T/min | 10T/min | 100T/min | 10T/min | 100T/min |
| Art Antérieur BR3 | 66 | 3 | Dispersion impossible | Dispersion impossible | Dispersion impossible | Dispersion impossible | Dispersion impossible | Dispersion impossible | Dispersion impossible | Dispersion impossible |
| | | 6 | 59,5 | 2 | 24040 | 2592 | Viscosité | trop élevée | non | mesurable |
| | | 8 | 59,1 | 1,9 | 214 | 160 | 302 | 218 | 165 | 98 |
| Invention | 67 | 3 | 59,9 | 4,84 | 79 | 136 | 95 | 148 | 89 | 102 |
| | | 6 | 58,9 | 1,25 | 3120 | 374 | 3400 | 336 | 3240 | 436 |
| | | 8 | 59,3 | 0,88 | 760 | 138 | 860 | 138 | 660 | 104 |

La lecture du tableau 11 permet de mettre en évidence que l'utilisation de copolymère selon l'invention contenant comme monomère non ionique au moins un monomère de formule (I) aboutit à l'obtention de suspensions aqueuses de pigments et/ou charges minérales, selon l'invention, moyennement à fortement chargées en matière minérale, stables dans le temps et ayant une faible sensibilité aux vacations de pH naturel de la dispersion vers des pH acides à très acides.

EXEMPLE 12

Cet exemple a pour but d'illustrer la faible sensibilité à la force ionique des suspensions aqueuses selon l'invention.

Pour ce faire, on effectue, avec le même mode opératoire et avec le même matériel que précédemment, la mise en suspension de matières minérales à une concentration en matière sèche égale à 72 % dans de l'eau salée ayant une teneur en chlorure de sodium égale à 2 moles par litre d'eau bipermutée.

Essai n° 68 :

Cet essai illustre l'art antérieur et met en oeuvre comme matière minérale un carbonate de calcium précipité commercialisé par Solvay sous le nom de Socal™ P3 et comme agent dispersant 0,73 % en poids sec, par rapport au poids sec de carbonate de calcium précipité, d'un acide polyacrylique de viscosité spécifique égale à 0,84.

La mise en suspension de la totalité du carbonate de calcium précipité a été impossible, l'axe de l'agitateur ayant bloqué avant la fin de l'introduction de la quantité totale du carbonate de calcium précipité.

Essai n° 69 :

Cet essai illustre l'invention et met en oeuvre comme matière minérale un carbonate de calcium précipité (commercialisé par Solvay sous le nom de Socal™ P 3) et comme agent dispersant 0,73 % en poids sec, par rapport au poids sec de carbonate de calcium précipité, du même copolymère que celui mis en oeuvre dans l'essai n° 53.

La mise en suspension de la totalité du carbonate de calcium précipité a été possible et les résultats expérimentaux de viscosité Brookfield™ et de conductivité sont consignés dans le tableau 12 suivant.

TABLEAU 12

| | ESSAI N° | pH | CONDUCTIVTIE mS/cm | VISCOSITE BROOKFIELD (mPa.s) | | | | | |
|---|---|---|---|---|---|---|---|---|---|
| | | | | INITIALE | | 8j AVANT AGITATION | | 8j APRES AGITAION | |
| | | | | 10 T/min | 100 T/min | 10 T/min | 200 T/min | 10 T/min | 100 T/min |
| Art antérieur | 68 | 9 | Mise en suspension de la totalité du carbonate de calcium impossible | | | | | | |
| Invention | 69 | 9 | 43,8 | 590 | 446 | 1000 | 960 | 620 | 544 |

La lecture du tableau 12 permet de mettre en évidence que l'utilisation de copolymère selon l'invention contenant comme monomère non ionique au moins un monomère de formule (I) aboutit à l'obtention de suspensions aqueuses de pigments et/ou charges minérales, selon l'invention, moyennement à fortement chargées en matière minérale, stables dans le temps et ayant une faible sensibilité à la force ionique du milieu permettant ainsi l'obtention de suspensions aqueuses de pigments et/ou charges minérales utilisables dans le domaine des boues de forage, en particulier des boues salées saturées et des boues à l'eau de mer.

EXEMPLE 13

Cet exemple concerne l'utilisation de l'agent dispersant, copolymère selon l'invention, dans le domaine des peintures, et plus particulièrement dans une formulation peinture aqueuse satinée.
Pour ce faire, on réalise deux essais :

- l'essai n° 70, qui illustre l'art antérieur et met en oeuvre le dispersant Coatex BR3
- l'essai n° 71, qui illustre l'invention et met en oeuvre le polymère neutralisé à 100 % par de la potasse de l'essai n° 42.

Essai n° 70:

Pour cet essai qui illustre l'art antérieur, on introduit successivement les constituants de ladite peinture aqueuse satinée qui sont :

| | |
|---|---|
| 40 g | de monopropylène glycol |
| 64 g | d'eau |
| 5 g | de dispersant Coatex BR3 à 40 % de matière sèche |
| 2 g | d'un biocide commercialisé par la société TROY sous le nom de MERGAL™ K6N |
| 1 g | d'un antimousse commercialisé par la société HENKEL sous le nom de Nopco™ NDW |
| 150 g | d'un carbonate de calcium commercialisé par la société Omya sous le nom de Omya DP 80 OG |
| 200 g | de dioxyde de titane commercialisé par la société MILLENNIUM sous le nom RHD2. |

On laisse agiter 20 minutes, puis on ajoute le complément en introduisant successivement les autres constituants de la peinture qui sont :

| | |
|---|---|
| 450 g | d'un liant styrène-acrylique en dispersion commercialisé par la société RHODIA sous le nom de RHODOPAS™ DS 910 |
| 30 g | de butyldiglycol |
| 100 g | d'eau |
| 4 g | d'un épaississant commercialisé par COATEX sous le nom de COATEX BR100 P |
| 1 g | d'ammoniaque à 28 % |
| 3 g | de Nopco™ NDW |

Après quelques minutes d'agitation de la composition aqueuse ainsi réalisée, à pH égal à 8,7 pendant lesquelles on constate qu'il y a un très bon empâtage, on mesure les viscosités Brookfield™ de la composition à 25°C, à 10 tours par minute (T/min) et 100 tours par minute à l'aide d'un viscosimètre Btookfield™ type RVT équipé du mobile adéquat.
Elles sont égales à 3400 mPa,s à 10T/min et 1900 mPa.s à 100T/min.
On détermine également la viscosité ICI, qui est la viscosité à haut gradient de vitesse de cisaillement (10000 $s^{-1}$) mesurée à l'aide d'un viscosimètre cone plan.
Elle est égale à 1,5.
Enfin, on mesure aussi la viscosité Stormer (KU) exprimée en Krebs Unit déterminée à l'aide d'un viscosimètre Stormer. On obtient une valeur de 94 KU.

Essai n° 71 :

Pour cet essai qui illustre l'invention, on introduit successivement les constituants de ladite peinture aqueuse satinée qui sont :

| | |
|---|---|
| 40 g | de monopropylène glycol |
| 62,7 g | d'eau |
| 6,3 g | du polymère de l'essai n° 42 à 31,6 % de matière sèche |
| 2 g | d'un biocide commercialisé par la société TROY sous le nom de MERGAL™ K6N |
| 1 g | d'un antimousse commercialisé par la société HENKEL sous le nom de Nopco™ NDW |
| 150 g | d'un carbonate de calcium commercialisé par la société Omya sous le nom de Omya DP 80 OG |
| 200 g | de dioxyde de titane commercialisé par la société MILLENNIUM sous le nom RHD2. |

On laisse agiter 20 minutes, puis on ajoute le complément en introduisant successivement les autres constituants de la peinture qui sont :

| | |
|---|---|
| 450 g | d'un liant styrène-acrylique en dispersion commercialisé par la société RHODIA sous le nom de RHODOPAS™ DS 910 |
| 30 g | de butyldiglycol |
| 100 g | d'eau |
| 4 g | d'un épaississant commercialisé par COATEX sous le nom de COATEX BR100 P |
| 1 g | d'ammoniaque à 28 % |
| 3 g | de Nopco™ NDW |

Après quelques minutes d'agitation de la composition aqueuse ainsi réalisée, à pH égal à 8,7 pendant lesquelles on constate qu'il y a un très bon empâtage, on mesure les viscosités Brookfield™ de la composition à 25°C, à 10 tours par minute (T/min) et 100 tours par minute à l'aide d'un viscosimètre Brookfield™ type RVT équipé du mobile adéquat. Elles sont égales à 3000 mPa.s à 10T/min et 1700 mPa.s à 100T/min.

On détermine également la viscosité ICI, qui est la viscosité à haut gradient de vitesse de cisaillement (10000 $s^{-1}$) mesurée à l'aide d'un viscosimètre cone plan.
Elle est égale à 1,4.

Enfin, on mesure aussi la viscosité Stormer (KU) exprimée en Krebs Unit déterminée à l'aide d'un viscosimètre Stormer. On obtient une valeur de 93 KU.

La comparaison des valeurs obtenues dans l'essai relatif à l'utilisation du copolymère selon l'invention avec celles obtenues dans l'essai relatif à l'utilisation d'un polymère couramment utilisé par l'homme du métier permet de constater que le copolymère selon l'invention peut être utilisé dans le domaine de la peinture.

EXEMPLE 14 :

Cet exemple concerne l'utilisation de l'agent dispersant, copolymère selon l'invention, dans le domaine des matières plastiques.

Pour ce faire, on filtre une suspension aqueuse de carbonate de calcium (marbre) obtenue après floculation pour aboutir à un gâteau de filtration de marbre de diamètre moyen égal à 2 micromètres mesuré par la mesure Sedigraph™ 5100.

A partir de ce gâteau, on prépare la suspension aqueuse de marbre par introduction, dans le gâteau de la quantité nécessaire en poids sec de l'agent polymère de l'essai n° 4 selon l'invention par rapport au poids sec dudit gâteau à mettre en suspension pour obtenir une suspension aqueuse de marbre à une concentration en matière sèche égale à 68 %.

Une fois cette suspension réalisée, on la sèche à une température inférieure à 105°C par la mise en oeuvre d'un sécheur de laboratoire de type Niro™.

La poudre obtenue sans agglomérat est alors divisée en deux échantillons, dont l'un fera l'objet du test de dispersion dans une résine thermoplastique et l'autre l'objet du test de dispersion dans une résine thermodurcissable.

Essai n° 72:

Cet essai, illustrant l'invention, représente le test de dispersion de la poudre de marbre, précédemment obtenue, dans une résine thermoplastique.

Pour ce faire, on introduit dans un mélangeur Guittard à bras en Z d'une capacité de 1,5 litres et disposant d'une cuve chauffée électriquement à 240°C, 300 grammes de marbre pulvérulent précédemment préparé et dont le diamètre moyen est égal à 2 $\mu$m,

Après 15 minutes de préchauffage à 240°C de la charge, il est introduit 3 grammes de stéarate de zinc commercialement disponible et 125,5 grammes de polypropylène homopolymère vendue par la société Appryl sous le nom de PPH 3120MN 1.

L'ensemble est mélangé durant 20 minutes à cette température et à la vitesse de 42 tours/minute.

Le mélange ainsi préparé, on a alors effectué un calandrage d'une partie de ce mélange sous forme de plaques qui ont été découpées en petits cubes ayant une dimension de 2 à 3 millimètres de côté et dont on a mesuré à 230°C l'indice de fluidité MFI sous une charge de 2,16 kg et de 10 kg avec une filière de 2,09 mm de diamètre.

Le MFI obtenu est égal à 8,0 g/10 min (230°C-2,16 kg-2,09 mm) et 132 g/10 min (230°C-10 kg-2,09 mm).

Ce résultat de MFI permet de constater que l'utilisation de l'agent, copolymère selon l'invention, aboutit à des compositions thermoplastiques chargées utilisables dans le domaine des thermoplastiques.

Essai n° 73 :

Cet essai, illustrant l'invention, représente le test de dispersion de la poudre de marbre, précédemment obtenue, dans une résine thermodurcissable de type polyester insaturé.

Pour ce faire, dans une boîte métallique de 500 ml, on pèse 90 grammes de résine polyester insaturé de référence Palapreg P18 de BASF, 60 grammes d'un additif appelé "Low Profile" et disponible sous la référence LP40A par Union Carbide ainsi que 300 grammes de la poudre de marbre obtenue.

Après 24 heures de stockage au repos, on note une présence de décantation ou de sédimentation avant homogénéisation.

On procède alors à l'homogénéisation du mélange par agitation avec une spatule, puis la viscosité Brookfield™ à 100 tours/min est mesurée après ces 24 heures à l'aide d'un viscosimètre Brookfield™ type RVT équipé du module 7,

Elle est égale à 32000 mPa.s.
Il est à noter que ce prémélange de polyester et de carbonate de calcium peut être utilisé pour la fabrication de préimprégnés de type SMC (Shect Moulding Compound) ou BMC (Bulk Moulding Compound).

EXEMPLE 15 :

Cet exemple concerne l'utilisation d'une suspension aqueuse de charge minérale selon l'invention dans le domaine du papier.
Il concerne plus particulièrement la détermination des différentes valeurs de viscosité Brookfield™ et de rétention d'eau des différentes sauces de couchage 100 % carbonate de calcium.

Essai n° 74 :

Cet essai illustre l'art antérieur et met en oeuvre une sauce de couchage constituée de:

- 100 parties, exprimées en matière sèche, d'une suspension aqueuse, de l'art antérieur à 72 % en matière sèche de carbonate de calcium de granulométrie équivalente à 75 % des particules ont un diamètre inférieur à 1 μm déterminé par Sedigraph™ 5100 et contenant 0,75 % en poids sec d'un dispersant commercialisé par la société Coatex sous le nom de M777,
- 12 parties, exprimées en matière sèche, d'un latex styrène-butadiène commercialisé par la société DOW sous le nom de « DL 950 »
- 0,3 partie, exprimée en matière sèche, d'un agent rétenteur d'eau commercialisé par la société Coatex sous le nom de Rheocoat™ 35.

La teneur en matière sèche de la sauce de couchage est de l'ordre de 65 %.

Essai n° 75 :

Cet essai illustre l'invention et met en oeuvre une sauce de couchage constituée de :

- 100 parties, exprimées en matière sèche, d'une suspension aqueuse, selon l'invention, à 72 % en matière sèche de carbonate de calcium de granulométrie équivalente à 75 % des particules ont un diamètre inférieur à 1 μm déterminé par Sedigraph™ 5100 et contenant 0,75 % en poids sec d'un copolymère selon l'invention composé de 20 % en poids d'acide acrylique et 80 % en poids de méthacrylate de méthoxy PEG 2000 et de viscosité spécifique égale à 1,26,
- 12 parties, exprimées en matière sèche, d'un latex stytène-butadièoe commercialisé par la société DOW sous le nom de « DL 950 »
- 0,3 partie, exprimée en matière sèche, d'un agent rétenteur d'eau commercialisé par la société Coatex sous le nom de Rheocoat™ 35.

La teneur en matière sèche de la sauce de couchage est de l'ordre de 65 %.
Les résultats des mesures de viscosité Brookfield™ déterminées à 10 et 100 tours par minute à 25°C à l'aide d'un viscosimètre Brookfield™ de type DV-1 équipé du mobile adéquat sont :

- Pour l'essai n° 74 de l'art antérieur ;

Viscosité Brookfield™ 10 t/min. = 8 000 mPa.s

Viscosité Brookfield™ 100 t/min. = 1 500 mPa.s.

- Pour l'essai n° 75 de l'invention :

Viscosité Brookfield™ 10 t/min. = 9 200 mPa.s

Viscosité Brookfield™ 100 t/min. = 1 800 mPa.s

Les résultats de la mesure de rétention d'eau obtenus selon la méthode décrite ci-après sont:

- Pour l'essai n° 74 de l'art antérieur, le volume d'eau au bout de 10 minutes est égal à 3,2 ml.

- Pour l'essai n° 75 de l'invention, le volume d'eau au bout de 10 minutes est égal à 2,8 ml.

Ainsi pour ces essais de mesure de rétention d'eau, la sauce de couchage papetière à tester est soumise à une pression de 100 psi (7 bars) dans un cylindre standardisé, équipé d'une surface de type papier filtre capable de laisser passer l'eau.
Après 10 minutes, le volume d'eau collecté est mesuré en ml,
Plus le volume d'eau collecté au bout de 10 minutes est faible, meilleure est la rétention.
Pour ce faire, on utilise un filtre-presse « API Fluid Loss Measurement » de la société Baroïd qui se compose essentiellement d'un étrier muni d'une vis de serrage permettant le blocage des trois parties du corps du filtre.
Ce corps se compose ;

- d'une embase percée d'un trou et dotée d'un ajutage par lequel s'écoule le filtrat. Cette embase supporte un tamis métallique de 60 à 80 mesh sur lequel est placé le papier filtre de 90 mm de diamètre (Whatman™ n° 50) dont l'équivalent est le type DURIEUX BLEU™ n° 3.

- d'un cylindre de diamètre intérieur de 76,2 mm et de hauteur de 128 mm.

- d'un couvercle muni d'une arrivée de gaz comprimé, dont l'étanchéité avec le cylindre est assurée à l'aide d'un joint plat, du même type que ceux placés sur l'embase,

Pour utiliser le filtre-presse, on pose dans l'ordre :

- le joint sur l'embase
- le tamis sur les joints
- le papier filtre sur le tamis
- le second joint sur le papier filtre

et on emboîte le cylindre sur l'embase avant de verrouiller le système à baïonnette.
Puis on remplit de sauce de couchage à tester (environ 480 g jusqu'à 3 cm du haut du cylindre), avant de poser le couvercle sur le cylindre en intercalant un joint.
On place ensuite l'ensemble dans l'étrier et on bloque à l'aide de la vis de serrage, puis on dispose d'une éprouvette graduée sous l'ajutage.
On applique une pression de 7 bars en déclenchant simultanément un chronomètre.
On note alors après 10 minutes le volume de fluide recueilli dans l'éprouvette. La précision du résultat obtenu est de ± 0,2 ml.
La lecture des précédents résultats montrent que les caractéristiques rhéologiques et de rétention d'eau pour l'essai selon l'invention permettent d'utiliser les suspensions aqueuses selon l'invention dans le domaine papetier et en particulier le couchage du papier.

## Revendications

1. Utilisation d'un copolymère faiblement anionique et hydrosoluble, comme agent d'aide au broyage de pigments et/ou charges minérales en suspension aqueuse **caractérisée en ce que** ledit copolymère est constitué :

    a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou

itaconique, ou leurs mélanges,

b) éventuellement d'au moins un monomère anionique à insaturation éthylénique et à fonction dicarboxylique ou sulfonique ou phosphorique ou phosphonique ou leur mélange choisi parmi les monomères à insaturation éthylénique et à fonction dicarboxylique tels que l'acide crotonique, isocrotonique, cinnamique, itaconique, maléique, citraconique ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges

c) d'au moins un monomère à insaturation éthylénique non ionique de formule (I)

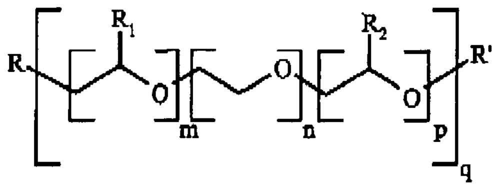

dans laquelle

- m et p représentent un nombre de motifs d'oxyde d'alkylène inférieur ou égal à 150,
- n représente un nombre de motifs d'oxyde d'éthylène inférieur ou égal à 150,
- q représente un nombre au moins égal à 1 et tels que

$$5 \leq (m+n+p)q \leq 150$$

$R_1$ l'hydrogène ou le radical méthyle ou éthyle

$R_2$ l'hydrogène ou le radical méthyle ou éthyle

R représente le radical insaturé polymérisable, appartenant au groupe des esters acrylique, méthacrylique, maléique, itaconique, crotonique, vinylphtalique ainsi que les insaturés uréthannes tels que les acryluréthanne, methacryluréthanne, $\alpha$-$\alpha$' diméthyl-isopropényl-benzyluréthanne, allyluréthanne, de même qu'au groupe des éthers allyliques ou vinyliques ou encore au groupe des amides éthyléniquement insaturés,

R' représente un radical hydrocarboné ayant 1 à 5 atomes de carbone

d) éventuellement d'un monomère du type acrylamide ou méthacrylamide ou leurs dérivés et leurs mélanges ou bien encore d'un ou plusieurs monomères non hydrosolubles tels que les acrylates ou méthacrylates d'alkyle, les vinyliques tels que l'acétate de vinyle, la vinylpyrrolidone, le styrène, l'alphaméthylstyrène et leurs dérivés, et

e) éventuellement d'au moins un monomère possédant au moins deux insaturations éthyléniques choisi dans le groupe constitué par le diméthacrylate d'éthylène glycol, le triméthylolpropanetriacrylate, l'acrylate d'allyle, les maléates d'allyle, le méthyléne-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres.

le total des constituants a), b), c), d) et e) étant égal à 100 %
et **en ce que** ledit copolymère possède une viscosité spécifique au plus égale à 10, préférentiellement au plus égale à 5 et très préférentiellement au plus égale à 2.

**2.** Utilisation d'un copolymère faiblement anionique et hydrosoluble, comme agent d'aide au broyage de pigments et/ou charges minérales en suspension aqueuse selon la revendication 1 **caractérisée en ce que** ledit copolymère est constitué ;

a) d'au moins un monomère anionique à insaturation éthylénique et à fonction monocarboxylique choisi parmi

les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges,

b) éventuellement d'au moins un monomère anionique à insaturation éthylénique et à fonction dicarboxylique ou sulfonique ou phosphorique ou phosphonique ou leur mélange choisi parmi les monomères à insaturation éthylénique et à fonction dicarboxylique tels que l'acide crotonique, isocrotonique, cinnamique, itaconique, maléique, citraconique ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges

c) d'au moins un monomère à insaturation éthylénique non ionique de formule (I)

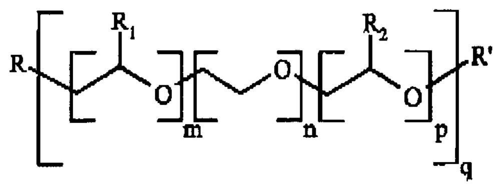

dans laquelle

- m et p représentent un nombre de motifs d'oxyde d'alkylène inférieur ou égal à 150,
- n représente un nombre de motifs d'oxyde d'éthylène inférieur ou égal à 150,
- q représente un nombre au moins égal à 1 et tels que

$$5 \leq (m+n+p)q \leq 150$$

$R_1$ l'hydrogène ou le radical méthyle ou éthyle
$R_2$ l'hydrogène ou le radical méthyle ou éthyle
R représente le radical insaturé polymérisable, appartenant au groupe des esters acrylique, méthacrylique, maléique, itaconique, crotonique, vinylphtalique ainsi que les insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques ou encore au groupe des amides éthyléniquement insaturés,
R' représente un radical hydrocarboné ayant 1 à 5 atomes de carbone
et

d) éventuellement d'au moins un monomère possédant au moins deux insaturations éthyléniques choisi dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres.

le total des constituants a), b), c), et d) étant égal à 100 %
et **en ce que** ledit copolymère possède une viscosité spécifique au plus égale à 10, préférentiellement au plus égale à 5 et très préférentiellement au plus égale à 2,

**3.** Utilisation d'un copolymère faiblement anionique et hydrosoluble, comme agent d'aide au broyage de pigments et/ou charges minérales en suspension aqueuse selon la revendication 1 **caractérisée en ce que** ledit copolymère est constitué:

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges,
b) éventuellement d'au moins un monomère anionique à insaturation éthylénique et à fonction dicarboxylique ou sulfonique ou phosphorique ou phosphonique ou leur mélange choisi parmi les monomères à insaturation éthylénique et à fonction dicarboxylique tels que l'acide crotonique, isocrotonique, cinnamique, itaconique, maléique, citraconique ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges
c) d'au moins un monomère à insaturation éthylénique non ionique de formule (I)

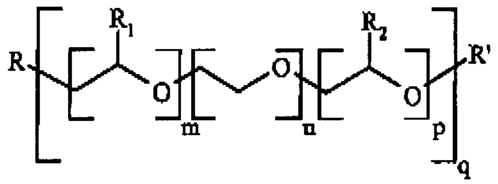

dans laquelle

- m et p représentent un nombre de motifs d'oxyde d'alkylène inférieur ou égal à 150,
- n représente un nombre de motifs d'oxyde d'éthylène inférieur ou égal à 150,
- q représente un nombre au moins égal à 1 et tels que

$$5 \leq (m+n+p)q \leq 150$$

$R_1$ l'hydrogène ou le radical méthyle ou éthyle
$R_2$ l'hydrogène ou le radical méthyle ou éthyle
R représente le radical insaturé polymérisable, appartenant au groupe des esters acrylique, méthacrylique, maléique, itaconique, crotonique, vinylphtalique ainsi que les insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques ou encore au groupe des amides éthyléniquement insaturés,
R'représente un radical hydrocarboné ayant 1 à 5 atomes de carbone

d) de plus éventuellement d'un monomère du type acrylamide ou méthacrylamide ou leurs dérivés et leurs mélanges ou bien encore d'un ou plusieurs monomères non hydrosolubles choisis parmi l'acétate de vinyle et la vinylpyrrolidone,
et
e) éventuellement d'au moins un monomère possédant au moins deux insaturations éthyléniques choisi dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrytamide, le tétrallyloxyéthane, les triallylcyanurates, les éthers allyliques obtenus à partir de polyols tels que le pentaérythritol, le sorbitol, le sucrose ou autres.

le total des constituants a), b), c), d) et e) étant égal à 100 %
et **en ce que** ledit copolymère possède une viscosité spécifique au plus égale à 10, préférentiellement au plus égale à 5 et très préférentiellement au plus égale à 2.

**4.** Utilisation d'un copolymère faiblement anionique et hydrosoluble selon la revendication 1 à 2, **caractérisée en ce**

**que** ledit copolymère est constitué, exprimé en poids :

a) de 2 % à 85 % et encore plus particulièrement de 2 % à 80 % d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges,
b) de 0 % à 80 % et encore plus particulièrement de 0 % à 50 % et très particulièrement de 0 % à 20 % d'au moins un monomère anionique à insaturation éthylénique et à fonction dicarboxylique ou sulfonique ou phosphorique ou phosphonique ou leur mélange choisi parmi les monomères à insaturation éthylénique et à fonction dicarboxylique tels que l'acide crotonique, isocrotonique, cinnamique, itaconique, maléique, citraconique ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges
c) de 20 % à 95 % d'au moins un monomère à insaturation éthylénique non ionique de formule (I)

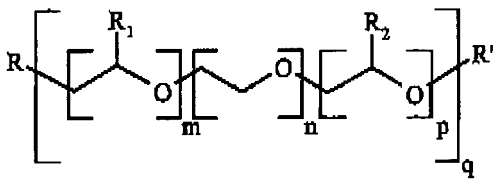

dans laquelle

- m et p représentent un nombre de motifs d'oxyde d'alkylène inférieur ou égal à 150,
- n représente un nombre de motifs d'oxyde d'éthylène inférieur ou égal à 150,
- q représente un nombre au moins égal à 1 et tels que

$$5 \leq (m+n+p)q \leq 150$$

$R_1$ l'hydrogène ou le radical méthyle ou éthyle
$R_2$ l'hydrogène ou le radical méthyle ou éthyle
R représente le radical insaturé polymérisable, appartenant au groupe des esters acrylique, méthacrylique, maléique, itaconique, crotonique, vinylphtalique ainsi que les insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques ou encore au groupe des amides éthyléniquement insaturés,
R' représente un radical hydrocarboné ayant 1 à 5 atomes de carbone
d) de 0 % à 50 % d'un monomère du type acrylamide ou méthacrylamide ou leurs dérivés et leurs mélanges ou bien encore d'un ou plusieurs monomères non hydrosolubles tels que les acrylates ou méthacrylates d'alkyle, les vinyliques tels que l'acétate de vinyle, la vinylpyrrolidone, le styrène, l'alphaméthylstyrène et leurs dérivés, et
e) de 0 % à 3 % d'au moins un monomère réticulant choisi dans le groupe constitué par le diméthacrylate d'éthylène glycol, le triméthylolpropanetriacrylate, l'acrylate d'allyle, les maléates d'allyle, le méthytene-bis-acrylamide, le méthyléne-bis-méthacrylamide, le tétrallyloxyéthane, les triallylcyanurates, les éthers allyliques obtenus à partir de polyols tels que le pentaérythritol, le sorbitol, le sucrose ou autres.

le total des constituants a), b), c), d) et e) étant égal à 100 %
et **en ce que** ledit copolymère possède une viscosité spécifique au plus égale à 10, préférentiellement au plus égale à 5 et très préférentiellement au plus égale à 2.

**5.** Utilisation d'un copolymère faiblement anionique et hydrosoluble selon la revendication 3, **caractérisée en ce que** ledit copolymère est constitué, exprimé en poids :

a) de 2 % à 85 % et encore plus particulièrement de 2 % à 80 % d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges,
b) de 0 % à 80 % et encore plus particulièrement de 0 % à 50 % et très particulièrement de 0 % à 20 % d'au moins un monomère anionique à insaturation éthylénique et à fonction dicarboxylique ou sulfonique, ou phosphorique ou phosphonique ou leur mélange choisi parmi les monomères à insaturation éthylénique et à fonction dicarboxylique tels que l'acide crotonique, isocrotonique, cinnamique, itaconique, maléique, citraconique ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore choisi parmi les monomères à insaturation éthylénique et à fonction phosphonique tels que l'acide vinyl phosphonique, ou leurs mélanges
c) de 20 % à 95 % d'au moins un monomère à insaturation éthylénique non ionique de formule (I)

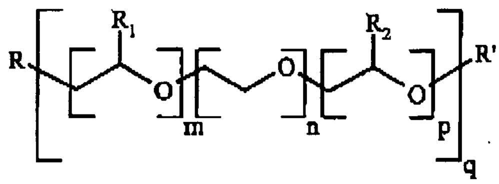

dans laquelle

- m et p représentent un nombre de motifs d'oxyde d'alkylène inférieur ou égal à 150,
- n représente un nombre de motifs d'oxyde d'éthylène inférieur ou égal à 150,
- q représente un nombre au moins égal à 1 et tels que

$$5 \leq (m+n+p)q \leq 150$$

$R_1$ l'hydrogène ou le radical méthyle ou éthyle

$R_2$ l'hydrogène ou le radical méthyle ou éthyle
R représente le radical insaturé polymérisable, appartenant au groupe des esters acrylique, méthacrylique, maléique, itaconique, crotonique, vinylphtalique ainsi que les insaturés uréthannes tels que les acryluréthanne, méthacryluréthanne, α-α' diméthyl-isopropenyl-benzyluréthanne, allyluréthanne, de même qu'au groupe des éthers allyliques ou vinyliques ou encore au groupe des amides éthyléniquement insaturés,
R' représente un radical hydrocarboné ayant 1 à 5 atomes de carbone
d) de 0 % à 50 % d'un monomère du type acrylamide ou méthacrylamide ou leurs dérivés et leurs mélanges ou bien encore d'un ou plusieurs monomères non hydrosolubles choisis parmi l'acétate de vinyle et la vinylpyrrolidone,
et
e) de 0 % à 3 % d'au moins un monomère réticulant choisi dans le groupe constitué par le diméthacrylate d'éthylène glycol, le triméthylolpropanetriacrylate, l'acrylate d'allyle, les maléates d'allyle, le méthylène-bis-acrylamide, le méthyléne-bis-méthacrylamide, le tétrallyloxyéthane, les triallylcyanurates, les éthers allyliques obtenus à partir de polyols tels que le pentaérythritol, le sorbitol, le sucrose ou autres.

le total des constituants a), b), c), d) et e) étant égal à 100 %

et **en ce que** ledit copolymère possède une viscosité spécifique au plus égale à 10, préférentiellement au plus égale à 5 et très préférentiellement au plus égale à 2.

**6.** Utilisation d'un copolymère faiblement anionique et hydrosoluble selon la revendication 4 ou 5 , **caractérisée en ce que** :

a) le monomère anionique à insaturation éthylénique et à fonction monocarboxylique est préférentiellement choisi parmi les monomères à insaturation éthylénique et à fonction monocarboxylique tels que l'acide acrylique ou méthacrylique.
b) le monomère anionique à insaturation éthylénique et à fonction dicarboxylique ou sulfonique ou phosphorique ou phosphonique ou leur mélange est préférentiellement choisi parmi les monomères à insaturation éthylénique et à fonction dicarboxylique tels que l'acide itaconique ou maléique ou bien encore choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou leurs mélanges phosphate d'acrylate de propylène glycol et leurs éthoxylats ou leurs mélanges
c) le monomère à insaturation éthylénique non ionique de formule (I) est tel que
$R_1$ représente l'hydrogène ou le radical méthyle ou éthyle
$R_2$ représente l'hydrogène ou le radical méthyle ou éthyle
R représente le radical insaturé polymérisable, appartenant au groupe des esters acrylique, méthacrylique, maléique, itaconique, crotonique, vinylphtalique ainsi que les insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques ou encore au groupe des amides éthyléniquement insaturés,
R' représente un radical hydrocarboné ayant 1 à 5 atomes de carbone
d) le monomère du type acrylamide ou méthacrylamide ou leurs dérivés est choisi parmi l'acrylamide ou le méthacrylamide, et le monomère non hydrosoluble est choisi parmi l'acrylate d'éthyle ou le styrène
e) le réticulant est choisi parmi le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol,le sucrose ou autres.

**7.** Utilisation d'un copolymère faiblement anionique et hydrosoluble selon l'une quelconque des revendications 1 à 6, **caractérisée en ce que** ledit copolymère obtenu sous forme acide et éventuellement distillé, peut être également partiellement ou totalement neutralisé par un ou plusieurs agents de neutralisation disposant d'une fonction neutralisante monovalente ou disposant d'une fonction neutralisante polyvalente tels que pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que la stéarylamine, les éthanolamines (mono-, di-, triéthanolamine), la mono et diéthylamine, la cyclohexylamine, la méthylcyclohexylamine ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

**8.** Utilisation d'un copolymère faiblement anionique et hydrosoluble selon la revendication 7, **caractérisée en ce que** ledit copolymère issu de la réaction de copolymérisation peut éventuellement avant ou après la réaction de neutralisation totale ou partielle, être traité et séparé en plusieurs phases, selon des procédés statiques ou dynamiques connus de l'homme de l'art, par un ou plusieurs solvants polaires appartenant au groupe constitué par l'eau, le méthanol, l'éthanol, le propanol, l'isopropanol, les butanols, l'acétone, le tétrahydrofurane ou leurs mélanges.

**9.** Suspension aqueuse de charges et/ou pigments **caractérisée en ce qu'**elle contient l'agent tel que décrit dans les revendications 1 à 6 et plus particulièrement **en ce qu'**elle contient de 0,05 % à 5 % en poids sec dudit agent par rapport au poids sec total des charges et/ou pigments, et encore plus particulièrement 0,3 % à 1,0 % en poids sec dudit agent par rapport au poids sec total des charges et/ou pigments.

**10.** Suspension aqueuse de charges et/ou pigments selon la revendication 9 **caractérisée en ce que** la charge et/ou pigment est choisi parmi le carbonate de calcium naturel tel que la calcite, la craie ou encore le marbre, le carbonate de calcium synthétique encore appelé carbonate de calcium précipité, les dolomies, l'hydroxyde de magnésium, le

kaolin, le talc, le gypse, l'oxyde de titane, ou encore l'hydroxyde d'aluminium ou toute autre charge et/ou pigment habituellement mis en oeuvre dans le domaine papetier ou pétrolier.

**11.** Suspension aqueuse de charges et/ou pigments selon la revendication 10 **caractérisée ce qu'**elle est faiblement sensible au pH et à la force ionique des milieux et en ce qu'elle a un potentiel Zéta faible, c'est-à-dire un potentiel Zéta compris entre 0 et -30 mV et préférentiellement entre 0 et -20 mV.

**12.** Utilisation de la suspension aqueuse de charges et/ou pigments selon l'une quelconque des revendications 9 à 11 au domaine papetier et plus particulièrement à la fabrication et/ou au couchage des feuilles de papier.

**13.** Feuilles de papier contenant la suspension aqueuse de charges et/ou pigments selon l'une quelconque des revendications 9 à 11.

**14.** Utilisation de la suspension aqueuse de charges et/ou pigments selon l'une quelconque des revendications 9 à 11 au domaine des boues de forage mises en oeuvre pour la prospection ou l'extraction pétrolière, en particulier dans le domaine des boues salées saturées et des boues à l'eau de mer.

**15.** Boue de forage contenant la suspension aqueuse de charges et/ou pigments selon l'une quelconque des revendications 9 à 11.

**16.** Utilisation de l'agent d'aide au broyage de pigments et/ou charges minérales en suspension aqueuse tel que décrit dans les revendications 1 à 6 dans le domaine des peintures.

**17.** Utilisation de l'agent d'aide au broyage de pigments et/ou charges minérales en suspension aqueuse tel que décrit dans les revendications 1 à 6 dans le domaine des matières plastiques et plus particulièrement dans le domaine des résines thermoplastiques ou thermodurcissables.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2488814
- FR 2603042
- EP 0100947 A
- EP 0100948 A
- EP 0129329 A
- EP 0542643 A
- EP 0542644 A
- EP 0281134 A
- EP 0307795 A
- WO 9109067 A
- EP 0870784 A
- FR 2303681